**Europäisches Patentamt**

**European Patent Office**

**Office européen des brevets**

(19)

(11) Veröffentlichungsnummer : **0 386 179 B1**

(12)

# EUROPÄISCHE PATENTSCHRIFT

(45) Veröffentlichungstag der Patentschrift :
**21.10.92 Patentblatt 92/43**

(51) Int. Cl.[5] : **B60T 8/40,** B60T 8/44,
B60T 8/48, B60T 8/88

(21) Anmeldenummer : **89907694.7**

(22) Anmeldetag : **27.06.89**

(86) Internationale Anmeldenummer :
**PCT/EP89/00720**

(87) Internationale Veröffentlichungsnummer :
**WO 90/00126 11.01.90 Gazette 90/02**

(54) **BLOCKIERGESCHÜTZTE KRAFTFAHRZEUGBREMSANLAGE.**

(30) Priorität : **01.07.88 DE 3822260**
**13.03.89 DE 3908062**
**25.03.89 DE 3909924**
**22.05.89 DE 3916640**
**13.06.89 DE 3919216**

(43) Veröffentlichungstag der Anmeldung :
**12.09.90 Patentblatt 90/37**

(45) Bekanntmachung des Hinweises auf die
Patenterteilung :
**21.10.92 Patentblatt 92/43**

(84) Benannte Vertragsstaaten :
**DE FR GB**

(56) Entgegenhaltungen :
**DE-A- 2 014 236**
**DE-A- 3 541 643**
**DE-A- 3 541 833**
**DE-A- 3 619 793**
**FR-A- 2 493 783**

(56) Entgegenhaltungen :
**FR-A-25 743 56**
**GB-A- 2 139 722**
**GB-A- 2 162 605**
**US-A- 4 778 225**

(73) Patentinhaber : **ALFRED TEVES GmbH**
**Guerickestrasse 7 Postfach 90 01 20**
**W-6000 Frankfurt am Main 90 (DE)**

(72) Erfinder : **VON GRÜNBERG, Hubertus**
**Fischbachstrasse 26**
**W-6380 Bad Homburg (DE)**
Erfinder : **WAGNER, Wilfried**
**Durchardtstrasse 30**
**W-6338 Hüttenberg-Weidenhausen (DE)**
Erfinder : **SCHIEL, Lothar**
**An der Tann 16**
**W-6238 Hofheim 6 (DE)**
Erfinder : **RÜFFER, Manfred**
**Im Brühl 7**
**W-6231 Sulzbach (DE)**
Erfinder : **JUNG, Christoph**
**Rossertstrasse 22a**
**W-6239 Eppstein/Ts. (DE)**

## Beschreibung

Die Erfindung betrifft eine blockiergeschützte Kraftfahrzeugbremsanlage mit einem wirkungsmäßig zwischen Bremspedal und Hauptbremszylinder angeordneten Unterdruck-Bremkraftverstärker mit zumindest zwei durch eine bewegliche Wand voneinander getrennten Arbeitskammern, von denen die erste mit einer Unterdruckquelle verbindbar und die zweite über ein mittels eines mit dem Bremspedal gekoppelten Eingangsglieds betätigbares Steuerventil belüftbar ist, um eine zur Bremspedalkraft proportionale Verstärkungskraft zu erzeugen, wobei die erste Arbeitskammer in einem Schlupfregelfall mittels einer ersten Ventilanordnung belüftbar ist und an einen Primär- und einen Sekundärdruckraum des Hauptbremszylinders über Bremsleitungen Radbremszylinder angeschlossen sind, mit den zu bremsenden Rädern zugeordneten Sensoren, die das Drehverhalten der Räder erfassen, um ein Blockieren festzustellen, und deren Ausgangssignale einer zentralen Regelelektronik zuführbar sind, mit deren Steuersignalen zur Schlupfregelung in die Bremsleitungen eingefügte elektromagnetisch betätigbare Druckmittel-Einlaß- und Auslaßventile steuerbar sind.

Eine derartige Kraftfahrzeugbremsanlage ist z. B. aus der älteren DE- Patentanmeldung P 38 17 785.4 der Anmelderin (nicht vorveröffentlicht) bekannt. Das Besondere an dieser bekannten Bremsanlage besteht darin, daß sie mit pneumatischen Mitteln versehen ist, die in einem Schlupfregelfall ein Belüften der ersten Arbeitskammer und- oder ein Evakuieren der zweiten Arbeitskammer ermöglichen, um die Verstärkungskraft des Unterdruck-Bremskraftverstärkers in einer der Betätigungsvorrichtung des Hauptbremszylinders entgegengesetzten Richtung wirksam bzw. unwirksam werden zu lassen.

Als nachteilig bei der vorbekannten Bremsanlage wird das im Regelfall mitpulsierende Bremspedal empfunden. Ein weiterer Nachteil wird darin gesehen, daß zum vollständigen Abbau des im Hauptbremszylinder herrschenden hydraulischen Druckes die zweite Arbeitskammer des Unterdruck-Bremskraftverstärkers evakuiert werden muß, wodurch der Unterdruckbedarf relativ groß wird.

Es ist daher Aufgabe der vorliegenden Erfindung, eine Bremsanlage der eingangs genannten Gattung so auszubilden, daß das erwähnte Pulsieren des Bremspedals im Regelfall eliminiert wird. Weiterhin soll der Unterdruckbedarf erheblich reduziert werden.

Diese Aufgaben werden erfindungsgemäß dadurch gelöst, daß die bewegliche Wand des Unterdruck-Bremskraftverstärkers unabhängig vom Eingangsglied bewegbar ist, und daß eine mit dem Eingangsglied in Wirkverbindung stehende hydraulische Kammer vorgesehen ist, deren Verbindung mit einem drucklosen Druckmittelvorratsbehälter absperrbar ist.

Eine vorteihafte Ausführungsform des Erfindungsgegenstandes sieht vor, daß der Primärkolben des Hauptbremszylinders durch einen in dessen Längsbohrung axial geführten, mit der beweglichen Wand in Verbindung stehenden Außenkolben sowie einen darin geführten, mit dem Eingangsglied verbundenen Innenkolben gebildet ist. Diese Maßnahme ermöglicht auf eine besonders platzsparende Art die Übertragung der Reaktionskraft auf das Bremspedal.

Um bei einem Ausfall des Primärbremskreises dem Fahrer das Bremsgefühl zu vermitteln, wird bei einer Weiterbildung des Erfindungsgegenstandes vorgesehen, daß im Primärdruckraum eine Reaktionseinrichtung angeordnet ist, die bei Ausfall des daran angeschlossenen Bremskreises im Sekundärdruckraum einen der Eingangskraft proportionalen Druckaufbau nach einer vorher festgelegten Charakteristik ermöglicht.

Die Reaktionseinrichtung wird entweder durch je eine am Außenkolben bzw. Innenkolben ausgebildete Ringfläche, die mit einem vorzugsweise am Sekundärkolben angeordneten ringförmigen elastischen Reaktionskörper zusammenwirken, oder durch eine in einem zylindrischen Körper angeordnete elastische Reaktionsscheibe gebildet, die mit dem Außenkolben über einen zylindrischen Körper uni mit dem Innenkolben direkt in Wirkverbindung steht, und an deren dem Primärkolben abgewandter Seite eine Druckplatte anliegt, an der ein Teil eines Öffnungsmechanismus eines ersten Zentralventils abgestützt ist.

Um den bei einer Druckerhöhung oberhalb des Aussteuerpunktes des Unterdruck-Bremskraftverstärkers auftretenden von dessen Übersetzung abhängigen Bremspedalverlustweg zu eliminieren wird weiter vorgeschlagen, daß der Zwischenkolben mit einer mit der hydraulischen Kammer in Verbindung stehenden axialen Bohrung versehen ist, an deren dem Primärkolben zugewandten Ende ein Betätigungskolben vorgesehen ist, der eine Arretierungsvorrichtung betätigt, die die relative Bewegung des Außen- und Innenkolbens zueinander begrenzt.

Eine wesentliche Erhöhung der Betriebssicherheit der erfindungsgemäßen Bremsanlage kann dadurch erreicht werden, daß eine permanente Überwachung der hydraulischen Kammer erfolgt. Zu diesem Zweck sieht eine weitere vorteilhafte Weiterbildung der Erfindung vor, daß die Verbindung der hydraulischen Kammer mittels zweier parallel geschalteten Rückhalteventile absperrbar ist, wobei die einzelnen Parallelzweige der Verbindung an je einen Druckttelraum angeschlossen sind, deren Füllstandsänderungen durch je eine Meßvorrichtung meßbar sind, deren Ausgangssignale miteinander verglichen werden und bei Feststellen einer Abweichung ein Differenzsignal gebildet wird, das eine Warneinrichtung aktiviert.

Um bei der erfindungsgemäßen Bremsanlage eine Antriebsschlupfregelung durchführen zu können, ist bei einer weiteren vorteilhaften Ausführung eine zweite Ventilanordnung vorgesehen, die eine zusätzliche, vom Eingangsglied unabhängige Verbindung der"zweiten Arbeitskammer mit der Atmosphäre unter gleichzeitigem Absperren der Verbindung der ersten und der zweiten Arbeitskammer ermöglicht.

Eine besonders kompakte, kostengünstig herstellbare Ausführung des Erfindungsgegenstandes, bei der die ursprüngliche Form des Verstärkergehäuses unverändert beibehalten werden kann, zeichnet sich dadurch aus, daß die Verbindung zwischen der ersten und der zweiten Arbeitskammer über einen pneumatischen Raum erfolgt, der über das Steuerventil des Unterdruck-Bremskraftverstärkers mit der zweiten Arbeitskammer verbindbar ist, wobei der pneumatische Raum einerseits durch ein die zweite Arbeitskammer nach außen hin begrenzendes Gehäuseteil und andererseits durch einen an diesem Gehäuseteil angebrachten Flansch begrenzt ist.

Eine Vereinfachung der Montage der Steuereinheit des erfindungsgemäßen Unterdruck-Bremskraftverstärkers, bei dem der Schließkörper des Steuerventils als Tellerventilläufer ausgebildet ist, wird nach einem weiteren Erfindungsmerkmal dadurch erreicht, daß eine sich ins Innere des Steuerventilgehäuses erstreckende Hülse vorgesehen ist, die gegenüber dem Flansch abgedichtet, an einem das Steuerventil enthaltenden Steuerventilgehäuse axial abgestützt ist und den Tellerventilkörper hält.

Eine wesentliche Verkürzung der axialen Baulänge der Gruppe Unterdruck-Bremskraftverstärker - Hauptzylinder wird bei einer vorteilhaften Weiterbildung dadurch erreicht, daß die Hülse gegenüber dem Flansch mittels eines Faltenbalges abgedichtet ist, dessen dem Flansch abgewandter Dichtwulst zwischen dem Steuerventilgehäuse und der Hülse eingeklemmt ist.

Bei einer weiteren Ausgestaltung des Erfindungsgegenstandes ist vorgesehen, daß der Flansch einen rohrförmigen axialen Fortsatz aufweist, der das Steuerventilgehäuse radial umgibt und in dem die Hülse mit einem Führungsbund geführt ist.

Durch diese Maßnahme wird eine stabile Ausführung des Erfindungsgegenstandes mit hervorragenden Führungseigenschaften erreicht, so daß eine erhebliche Erhöhung der Betriebssicherheit erzielt wird. Eine Verbeserung der Zentrierung des Steuerventilgehäuses wird bei einer anderen Weiterbildung des Erfindungsgegenstandes dadurch gewährleistet, daß das Steuerventilgehäuse mit Führungsrippen versehen ist, die radial an der Hülse anliegen bzw. daß die Hülse mit radialen Führungsrippen bzw. -laschen versehen ist.

Um eine feinfühlige Ansteuerung des Unterdruck-Bremskraftverstärkers nach der Erfindung in einem Anfahrschlupfregelfall zu ermöglichen wird weiterhin vorgeschlagen, daß die zweite Ventilanordnung durch ein elektromagnetisch betätigbares, stromlos offenes 2/2-Wegeventil sowie ein elektromagnetisch betätigbares, stromlos geschlossenes 2/2-Wegeventil gebildet ist. Diese Maßnahme ermöglicht eine Realisierung einer Druckhaltephase.

Eine weitere Kostensenkung kann bei einer Weiterbildung des Erfindungsgegenstandes dadurch erreicht werden, daß die zweite Ventilanordnung durch ein elektromagnetisch betätigbares 4/2-Wegeventil gebildet ist.

Nach einer anderen, vorteilhaften Ausführungsvariante der Erfindung wird vorgesehen, daß die zweite Ventilanordnung hauptzylinderseitig am Verstärkergehäuse angebracht ist. Diese Maßnahme gewährleistet einen besseren Zugang zum Bremsgerät (vom Motorraum des Kraftfahrzeuges aus), der z.B. bei Fehlersuche, Inspektionen u.ä. von Vorteil ist.

Eine besonders kompakte, zuverlässig arbeitende Weiterbildung der Erfindung sieht vor, daß sowohl die zusätzliche Verbindung der zweiten Arbeitskammer mit der Atmosphäre als auch deren Verbindung mit der ersten Arbeitskammer über pneumatische Kanäle erfolgt, die sich innerhalb des Verstärkergehäuses durch die bewegliche Wand hindurch erstrecken.

Eine weitere Verkürzung der axialen Baulänge der Funktionsgruppe Unterdruck-Bremskraftverstärker - Hauptzylinder bei gleichzeitiger Verringerung des Aufnahmevolumens der hydraulischen Kammer wird nach einem weiteren Erfindungsmerkmal dadurch erreicht, daß die hydraulische Kammer durch einen Ringraum gebildet ist, der einerseits durch die Wandung einer in einem am hauptzylinderseitigen Gehäuseteil angebrachten Zwischenstück ausgebildeten Bohrung und andererseits durch die Oberfläche des in die Bohrung eingeschobenen Hauptbremszylinders begrenzt ist, und in dem ein mit einem das Steuerventil betätigenden Ventilkolben verbundener den Zwischenkolben bildender Ringkolben abgedichtet geführt ist.

Eine genau definierte Ausgangsposition des Zwischen- bzw. Ringkolbs mit geringeren Toleranzen wird bei einer vorteilhaften Weiterbildung des Erfindungsgegenstandes schließlich dadurch erreicht, daß der Ringkolben am Verstärkergehäuse gefesselt ist.

Um die Gefahr einer Entbremsung des Fahrzeuges bei unbeabsichtigtem Umschalten des Rückhalteventils weitgehend zu eliminieren und jederzeit eine Möglichkeit einer Notbremsung zu gewährleisten wird weiter vorgeschlagen, daß Mittel vorgesehen sind, die bei geschlossenem Rückhalteventil eine begrenzte Bewegung des Eingangsglieds in Betätigungsrichtung ermöglichen.

Zur Konkretisierung dieses Erfindungsgedankens wird bei einer vorteilhaften Weiterbildung des Erfindungsgegenstandes, bei der das Eingangsglied mit dem als Ringkolben ausgebildeten, koaxial zum Eingangsglied bzw. zum Primärkolben angeordneten Zwischenkolben über ein Kraftübertragungselement in Eingriff steht, vorgeschlagen, daß zwischen dem Kraftübertragungselement und dem Zwischenkolben ein axialer Abstand vorgesehen ist. Diese Maßnahme hat zur Folge, daß beim Eintritt in die Regelung unterhalb des (gesetzlich vorgeschriebenen) Notbremsdruckniveaus ein Durchfallen des Eingangsglieds bzw. des mit ihm gekoppelten Betätigungspedals bis zum Anschlag des Kraftübertragungsgliedes am Zwischenkolben erfolgt. Tritt dagegen die ABS-Regelung oberhalb des Notbremsniveaus ein, so wird das Betätigungspedal in derselben Position blockiert.

Eine Funktionsverbesserung der erfindungsgemäßen Betätigungseinheit wird bei einer weiteren vorteilhaften Ausführungsform dadurch erreicht, daß die bewegliche Wand in kraftübertragenden Eingriff mit dem Zwischenkolben bringbar ist. Die Anordnung ist dabei vorzugsweise derart getroffen, daß die bewegliche Wand in einem Abstand vom Zwischenkolben angeordnet ist, nach dessen Zurücklegen eine Übertragung der Verstärkungskraft auf den Zwischenkolben stattfindet.

Eine andere vorteilhafte Weiterbildung sieht vor, daß der zwischen dem Kraftübertragungsglied und dem Zwischenkolben vorgesehene axiale Abstand größer als der Abstand zwischen dem Zwischenkolben und der beweglichen Wand ist. Durch diese Maßnahme wird erreicht, daß der Zwischenkolben bei der Betätigung und richtig funktionierendem Rückhalteventil durch die Wirkung der Verstärkungskraft verschoben wird, so daß für die Betätigung geringere Fußkräfte aufzubringen sind. Im Regelmodus ergibt sich ein Durchfallweg des Eingangsgliedes, der dem Differenzwert zwischen den beiden Abständen entspricht.

Um diesen Durchfallweg zu eliminieren, sieht eine andere Erfindungsvariante vor, daß der zwischen dem Kraftübertragungsglied und dem Zwischenkolben vorgesehene axiale Abstand kleiner als der Abstand zwischen dem Zwischenkolben und der beweglichen Wand ist. Infolgedessen werden bei der Betätigung höhere Fußkräfte benötigt, da der Zwischenkolben vom Eingangsglied mitgenommen wird.

Eine besonders kompakte, kostengünstig herstellbare Ausführung des Erfindungsgegenstandes zeichnet sich dadurch aus, daß das Kraftübertragungselement durch das Eingangsglied sowie den Zwischenkolben senkrecht zu dessen Längsachse hindurchragt und daß der Zwischenkolben mit Schlitzen versehen ist, die die Bewegung des Eingangsgliedes begrenzen und deren Länge dem axialen Abstand entspricht.

Eine genau definierte Ausgangsposition des Zwischenkolbens wird bei einer anderen Weiterbildung der Erfindung dadurch erreicht, daß der Zwischenkolben durch eine Rückstellfeder vorgespannt ist und mit einem innerhalb der hydraulischen Kammer angeordneten Anschlag zusammenwirkt.

Eine erhebliche Erhöhung der Verstärkungskraft wird nach einem anderen Merkmal der Erfindung dadurch erreicht, daß der Unterdruck-Bremskraftverstärker in Tandembauweise ausgeführt ist.

Um eine größere Flexibilität beim Einbau der erfindungsgemäß ausgestalteten Betätigungseinheit, insbesondere mit einem in einem Steuerventilgehäuse angeordneten, eine auf die bewegliche Wand einwirkende pneumatische Druckdifferenz steuernden Steuerventil, sowie der Komponenten der blockiergeschützten Bremsanlage zu erzielen wird nach einer anderen Ausführungsform des Erfindungsgegenstandes vorgeschlagen, daß das Steuerventilgehäuse mit dem Eingangsglied und der Hauptbremszylinder zu einer baulichen Einheit zusammengefaßt und örtlich vom Unterdruck-Bremskraftverstärker getrennt angeordnet sind.

Eine kompakte, axial kurzbauende Ausführung der Erfindung in der erwähnten, aufgelösten Bauweise wird nach einem weiteren vorteilhaften Merkmal dadurch erreicht, daß das Kraftübertragungslement als ein durch den Primärkolben hindurchragender zylindrischer Stift ausgebildet ist und daß der Zwischenkolben eine axiale Nabe aufweist, die den Stift radial umgreift und mit einem Anschlagbund versehen ist, dessen Entfernung vom Stift dem axialen Abstand entspricht.

Eine andere vorteilhafte Weiterbildung des Erfindungsgegenstandes sieht vor, daß das Eingangsglied durch einen am Zwischenkolben vorgesehenen Anschlag positioniert ist. Diese Maßnahme bringt eine erhebliche Verkürzung der axialen Baulänge der baulichen Einheit bei gleichzeitiger Minimierung deren Herstellungstoleranzen.

Bei einer erfindungsgemäßen Betätigungseinheit, bei der eine zweite Verbindung zwischen der hydraulischen Kammer und dem Druckmittelvorratsbehälter vorgesehen ist, wird eine Senkung der Herstellungs- und Montagekosten dadurch erreicht, daß die zweite Verbindung durch eine Bewegung des Zwischenkolbens in Betätigungsrichtung absperrbar ist. Die zweite Verbindung führt dabei über eine in der hydraulischen Kammer mündende Öffnung (Schnüffelloch), die von einer am Zwischenkolben angeordneten Dichtmanschette überfahren wird. Diese Maßnahme bietet eine sicher funktionierende Lösung, bei der keine zusätzlichen Bauteile benötigt werden.

Ein kraftloses Durchfallen des Eingangsglieds wird schließlich nach einem weiteren Erfindungsmerkmal dadurch verhindert bzw. wirksam gedämpft, daß die Öffnung als Drosselbohrung ausgebildet ist.

Um bei einer bei der erfindungsgemäß aufgebauten Kraftfahrzeugbremsanlage einsetzbaren Betätigungseinheit eine Ansprechcharakteristik mit sprunghaftem Anstieg der Ausgangskraft (sog. "Springerfunktion") "gerundete Kennlinie" zu realisieren, wird nach einem weiteren wichtigen Merkmal vorgesehen, daß die Reaktionseinrichtung ein Kraftübertragungselement aufweist, das in axialem Abstand vom Eingangsglied (Innenkolben) angeordnet ist und bei Erreichen eines vorgegebenen Druckes im Primärdruckraum eine gegen die Kraft einer am Verstärkungskraftabgabeglied (Außenkolben) abgestützten Druckfeder gerichtete Kraftkomponente am Eingangsglied (Innenkolben) wirksam werden läßt.

Bei einer vorteilhaften Weiterbildung der Erfindung wird vorgesehen, daß das Kraftübertragungselement im Außenkolben abgedichtet geführt ist und daß die Druckfeder sich an einer am Außenkolben ausgebildeten Ringfläche abstützt.

Die Druckfeder kann vorzugsweise als eine zylindrische Spiralfeder oder eine Tellerfeder ausgebildet sein.

Um die Ansprechcharakteristik in Form einer "gerundeten Kennlinie" realisieren zu können, sieht eine andere vorteilhafte Weiterbildung des Erfindungsgegenstandes vor, daß die Druckfeder als eine Gummifeder ausgebildet ist, deren Kontur in der Anfangsphase der Betätigung lediglich eine Teilanlage des Innenkolbens gestattet.

Das Ende des Innenkolbens ist dabei vorzugsweise kalottenförmig ausgebildet und wirkt mit einer konischen Ausnehmung der Gummifeder zusammen.

Eine andere Ausführungsvariante sieht vor, daß das Ende des Innenkolbens als ein Regelstumpf ausgebildet ist, dessen Kegelwinkel größer ist als der Regelwinkel der in der Gummifeder ausgebildeten konischen Ausnehmung.

Um die Gummifeder vor Beschädigung durch den Innenkolben zu schützen, wird nach einem weiteren Merkmal der Erfindung vorgechlagen, daß das Kraftübertragungsglied mit einem auf den Innenkolben zu gerichteten, die Gummifeder durchdringenden axialen Fortsatz versehen ist, dessen Länge der Länge der Gummifeder abzüglich der Tiefe der konischen Ausnehmung entspricht.

Weitere Merkmale, Vorteile und Anwendungsmöglichkeiten der Erfindung gehen aus den Unteransprüchen und der folgenden Beschreibung von fünf Ausführungsbeispielen anhand der beigefügten Zeichnung hervor. In der Zeichnung zeigt:

Fig. 1 eine schematische Darstellung einer Kraftfahrzeugbremsanlage nach der Erfindung;

Fig. 2 einen Schnitt durch ein Ausführungsbeispiel eines bei der Kraftfahrzeugbremsanlage nach Fig. 1 verwendeten Unterdruck-Bremskraftverstärkers,

Fig. 3 den Schnitt A-A nach Fig. 2,

Fig. 4 eine Draufsicht des in Fig. 2 gezeigten Hauptbremszylinders,

Fig. 5 eine Teildarstellung einer zweiten Ausführung des erfindungsgemäßen Unterdruck-Bremskraftverstärkers im Axialschnitt,

Fig. 6 einen Schnitt durch ein drittes Ausführungsbeispiel des Unterdruck-Bremskraftverstärkers;

Fig. 7 ein viertes Ausführungsbeispiel des bei der Kraftfahrzeugbremsanlage nach Fig. 1 verwendeten Unterdruck-Bremskraftverstärkers im Axialschnitt;

Fig. 8 ein fünftes Ausführungsbeispiel des bei der Kraftfahrzeugbremsanlage nach Fig. 1 verwendeten Unterdruck-Bremskraftverstärkers im Axialschnitt;

Fig. 9 eine bei der Kraftfahrzeugbremsanlage nach Fig. 1 einsetzbare Betätigungseinheit in aufgelöster Bauweise im Axialschnitt;

Fig. 10 die Ausbildung des den Primärdruckraum begrenzenden Primärkolbens nach Fig. 7 in vergrößertem Maßstab,

Fig. 11 eine graphische Darstellung einer einen "Springer-Effekt"aufweisenden Ansprechcharakteristik des in Fig. 7 und 8 gezeigten Unterdruck-Bremskraftverstärkers.

Fig. 12 eine andere Ausgestaltung des in Fig. 10 dargestellten Primärkolbens und

Fig. 13 eine graphische Darstellung einer durch die Anordnung nach Fig. 12 realisierbaren Ansprechcharakteristik in Form einer gerundeten Kennlinie.

In den verschiedenen Figuren der Zeichnung sind einander entsprechende Bauteile mit gleichen Bezugszeichen bezeichnet.

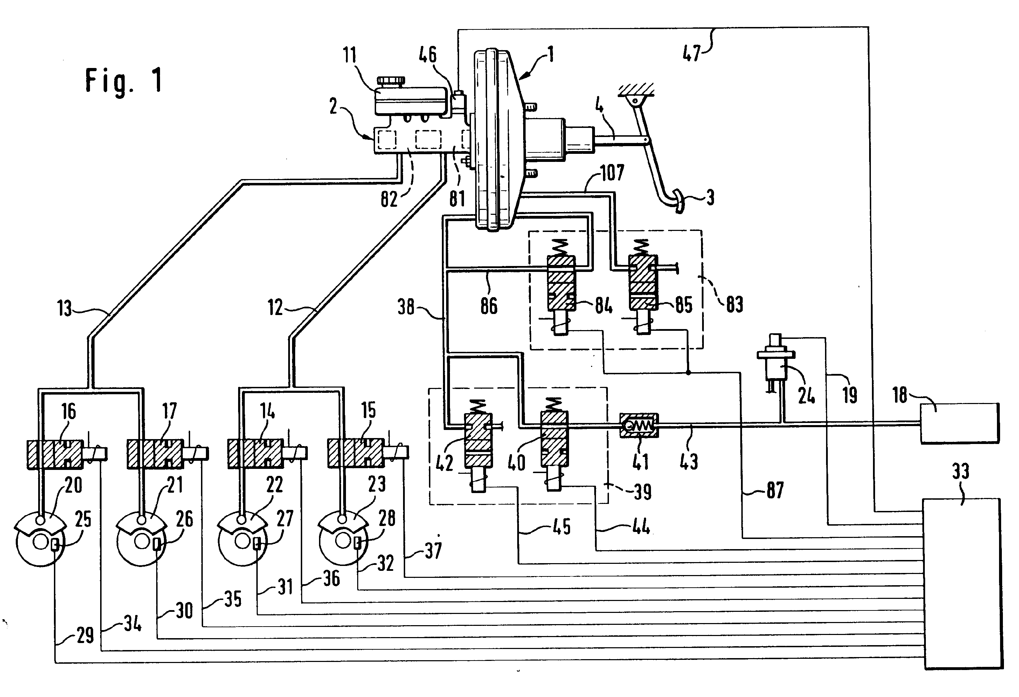

Fig. 1 zeigt eine blockiergeschützte Kraftfahrzeugsbremsanlage mit einem Unterdruck-Bremskraftverstärker 1, der über ein Eingangsglied 4 in bekannter Weise mit einem Bremspedal 3 verbunden ist. Auf der dem Eingangsglied 4 angewandten Seite des Unterdruck-Bremskraftverstärkers 1 ist ein Tandem-Hauptbremszylinder 2 vorgesehen, der mit einem Bremsflüssigkeitsbehälter 11 in Verbindung steht. An die Druckräume 81,82 des Tandem-Hauptbremszylinders 2 ist ein erster und ein zweiter Bremskreis 12 bzw. 13 angeschlossen.

Der erste Bremskreis 12 verbindet über zwei Magnetventile 14,15, die als 2/2-Wegeventile ausgebildet sind, die Radbremszylinder der nur schematisch dargestellten zwei Radbremsen 22 bzw. 23 mit dem Tandem-Hauptbremszylinder 2. Jedes der beiden Magnetventile 14,15 ist hierbei einer der beiden Radbremsen 22 bzw. 23 zugeordnet. Der zweite Bremskreis 13 verbindet die Radbremszylinder der ebenfalls nur schematisch dargestellten weiteren zwei Radbremsen 20,21 mit dem Tandem-Hauptbremszylinder 2 über zwei weitere Magnetventile 16,17, die ebenfalls als 2/2-Wegeventile ausgebildet sind.

Den Vorder- und Hinterradbremsen 20,21,22 und 23 ist jeweils ein Sensor 25,26,27 bzw. 28 zugeordnet, die über entsprechende Signalleitungen 29,30,31 bzw. 32 mit einer zentralen Regelelektronik 33 verbunden sind. Die Sensoren 25,26,27 und 28, die beispielsweise als induktive Meßwertaufnehmer ausgebildet sein können, überwachen das Raddrehverhalten und liefern entsprechende Signale über die Signalleitungen 29,30,31 bzw. 32 an die Regelelektronik 33. Die Regelelektronik 33 ist über Steuerleitungen 34,35,36,37 mit den Magnetventilen 16,17 bzw. 14,15 verbunden, um diese in Abhängigkeit von den Sensorsignalen zu betätigen.

An die hauptzylinderseitige Arbeitskammer des Unterdruck-Bremskraftverstärkers 1 ist über pneumatische Leitungen 38,43 eine erste Ventilanordnung 39 angeschlossen, die in Abhängigkeit von den Steuersignalen der Regelelektronik 33 deren Evakuieren bzw. Belüften ermöglicht. Die Ventilanordnung 39 wird durch zwei 2/2-Wegeventile 40,42 gebildet, die mittels Steuerleitungen 44,45 mit der Regelelektronik 33 in Verbindung stehen.

Das die Atmosphäre schaltende 2/2-Wegeventil 42 ist vorzugsweise als stromlos geschlossenes Elektromagnetventil ausgebildet, während das einen Unterdruck schaltende 2/2-Wegeventil 40 ein stromlos offenes Elektromagnetventil ist, dessen Eingang über ein Rückschlagventil 41 an eine Unterdruckquelle 18 angeschlossen ist.

Der Fig. 1 ist weiter eine zweite pneumatische Ventilanordnung 83 zu entnehmen, die durch ein stromlos offenes elektromagnetisch betätigbares 2/2-Wegeventil 84 sowie ein stromlos geschlossenes elektromagnetisch betätigbares 2/2-Wegeventil 85 gebildet ist. Das 2/2-Wegeventil 84 ist in eine schematisch dargestellte Verbindung 86 zwischen den beiden nicht gezeigten Arbeitskammern des Unterdruck-Bremskraftverstärkers 1 eingeschaltet, während das stromlos geschlossene 2/2-Wegeventil 85 eine Belüftung der bremspedalseitigen Arbeitskammer über eine zweite pneumatische Verbindung 107 unabhängig von der Bremspedalstellung ermöglicht. Die beiden 2/2-Wegeventile 84,85 können mittels einer an die zentrale Regelelektronik 33 angeschlossenen Steuerleitung 87 gleichzeitig aktiviert werden. An die Unterdruckquelle 18 ist auch ein Drucksensor 24 angeschlossen, dessen Ausgangssignal über eine Signalleitung 19 der zentralen Regelelektronik 33 zuführbar ist. Die Aufgabe des Drucksensors 24 geht aus der nachfolgenden Beschreibung hervor.

Am Hauptbremszylinder 2 ist schließlich ein Rückhalteventil 46 angeordnet, das mittels einer Steuerleitung 47 mit der zentralen Regelelektronik 33 in Verbindung steht und dessen Aufgabe im Zusammenhang mit der Funktion der erfindungsgemäßen Kraftfahrzeugbremsanlage näher erläutert wird.

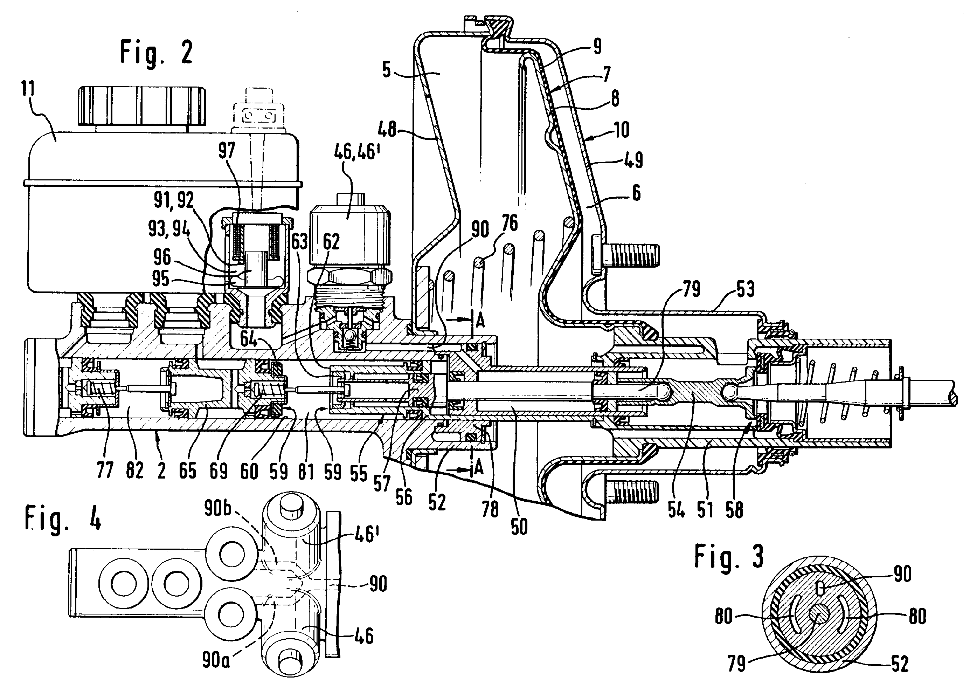

Nach Fig. 2 weist der Unterdruck-Bremskraftverstärker 1 zwei schalenförmige, mit ihren offenen Seiten zusammengebaute Gehäuseteile 48,49 auf, die ein Verstärkergehäuse 10 bilden. Das in Fig. 2 linke, mit einem näher nicht bezeichneten pneumatischen Anschluß versehene Gehäuseteil 48 ist fest mit dem Tandem-Hauptbremszylinder 2 verbunden, während das rechte Gehäuseteil 49 einen zentralen Führungsstutzen 53 aufweist, der ein Steuerventilgehäuse 51 des Unterdruck-Bremskraftverstärkers 1 gleitend und unterdruckdicht geführt hält.

Der Innenraum des Verstärkergehäuses 10 wird durch eine darin angeordnete, aus einem Membranteller 8 und einer daran anliegenden Rollmembran 9 bestehende bewegliche Wand 7 in eine erste Arbeitskammer 5 sowie eine zweite Arbeitskammer 6 unterteilt, die bei einer Normalbremsung mittels einer im Steuergehäuse 51 angeordneten Ventilanordnung 58 belüftet wird. Die an sich bekannte Ventilanordnung 58 wird von einem mit dem Eingangsglied 4 verbundenen Ventilkolben 54 betätigt, der mit einem in einer hydraulischen Kammer 50 verschiebbar geführten Zwischenkolben 79 in Verbindung steht. Zum Zurückstellen der beweglichen Wand 7 ist eine Rückstellfeder 76 vorgesehen, die zwischen dem vorderen Gehäuseteil 48 und dem Membranteller 8 eingespannt ist.

Der am vorderen Gehäuseteil 48 angeflanschte in einer Längsbohrung 60 einen Sekundärdruckraum 82 aufweisende Tandemhauptzylinder 2 ist an seinem verstärkerseitigen Ende mit einer, in die erste Arbeitskammer 5 des Unterdruck-Bremskraftverstärkers 1 hineinragenden axialen Verlängerung 52 versehen, die durch ein zylindrisches Teil 78 verschlossen ist, in dessen Bohrung die hydraulische Kammer 50 begrenzt ist.

Am hauptzylinderseitigen Ende des in der Kammer 50 axial geführten Zwischenkolbens 79 ist ein Teil (Innenkolben 57) eines den Primärdruckraum 81 begrenzenden Primärkolbens 55 ausgebildet, dessen zweiter Teil (Außenkolben 56) über im Querschnitt (Fig. 3) kreissegmentförmige Arme 80 mit der beweglichen Wand 7 in Verbindung steht. Am Hauptbremszylinder 2 sind im dargestellten Beispiel zwei parallel geschaltete elektromagnetische 2/2-Wegeventile 46,46' angeordnet, die eine hydraulische Verbindung 90 der hydraulischen Kammer 50 mit dem Druckmittelvorratsbehälter 11 absperren bzw. freigeben, wobei die beiden Druckräume 81,82 des Tandemhauptzylinders 2 über an sich bekannte Zentralventile 69,77 mit dem Druckmittelvorratsbehälter 11 in Verbindung stehen, die im Sekundärkolben 65 bzw. am Boden der Längsbohrung 60 angeordnet sind. Um schließlich bei einem Ausfall des Primärkreises 12 im Sekundärdruckraum 82 einen der Bremspedalkraft proportionalen Druck aufbauen zu können ist im Primärdruckraum 81 eine Reaktionseinrichtung 59 vorgesehen, die durch an den beiden Kolben 56,57 ausgebildete Ringflächen 62 (Außenkolben 56) und 63 (Innenkolben 57) gebildet ist, die an der Stirnfläche eines am Sekundärkolben 65 angebrachten elastischen Reaktionskörpers 64 zur Anlage kommen. Das Übersetzungsverhältnis beim Ausfall des Primärdruckkreises 12 ist durch die Wahl der Ringflächen 62,63 einstellbar.

Die Verbindung 90 der hydraulischen Kammer 50 mit dem Druckmittelvorratsbehälter 11 bildet im Bereich der beiden Rückhalteventile 46,46' zwei Parallelzweige 90a,90b, die an je einen vorzugsweise im Druckmittelbehälter 11 ausgebildeten Druckmittelraum 93,94 angeschlossen sind. Die Füllstandsänderungen der beiden Druckmittelräume 93,94 werden durch Meßvorrichtungen 91,92 überwacht, die im dargestellten Beispiel aus einem einen ferromagnetischen Kern 96 tragenden Schwimmer 95 besteht, dessen Vertikalbewegung Änderungen der Induktivität einer Spule 97 bewirkt, die an die zentrale Elektronik 33 angeschlossen ist.

Die Funktionsweise der in der Zeichnung dargestellten erfindungsgemäßen Kraftfahrzeugbremsanlage wird nachfolgend beschrieben:

In der Ausgangsposition (bei stillstehendem Motor) können die beiden Arbeitskammern 5 und 6 unter Atmosphärendruck stehen, so daß die bewegliche Wand 7 druckausgeglichen ist und durch die Rückstellfeder 76 an einem nicht gezeigten Anschlag am hinteren Gehäuseteil 49 gehalten wird. Da der Steuerkolben 54 über den Zwischenkolben 79 bzw. den Innenkolben 57 durch Anschlag im Tandem-Hauptbremszylinder 2 positioniert ist, befindet sich die Ventilanordnung 58 in einem Zustand, in dem der am Steuerkolben 54 ausgebildete Atmosphärendichtsitz offen und der Unterdrucksitz am Steuergehäuse 51 geschlossen ist, so daß die beiden Arbeitskammern 5 und 6 voneinander getrennt sind. Wird nun die erste Arbeitskammer 5 evakuiert (beim Anlassen des Motors), so bewirkt die an die bewegliche Wand 7 einwirkende Druckdifferenz deren Bewegung in Richtung auf den Hauptbremszylinder 2 zu, so daß zunächst der Atmosphärendichtsitz geschlossen und unmittelbar danach der Unterdrucksitz geöffnet wird. Dadurch wird ein Evakuieren der inzwischen von der Atmoshäre getrennten zweiten Arbeitskammer 6 ermöglicht, so daß an der beweglichen Wand 7 erneut ein Gleichgewichtszustand auftritt, in dem beide Dichtsitze der Ventilanordnung 58 geschlossen sind und der Unterdruck-Bremskraftverstärker 1 sich in einer Bereitschaftsstellung befindet, die in der Zeichnung dargestellt ist.

Wird nun beim Bremsen das Bremspedal 3 betätigt, so werden durch die Krafteinwirkung das Eingangsglied 4 mit dem Steuerkolben 54 nach links verschoben, wodurch die Ventilanordnung 58 betätigt wird. Dadurch wird an der beweglichen Wand 7 eine fußkraftproportionale Druckdifferenz eingesteuert, die eine Verstärkungskraft erzeugt, die zur Pedalkraft hinzuaddiert und auf den Primärkolben 55 des Hauptbremszylinders 2 übertragen wird, um einen hydraulischen Druck in den beiden Druckräumen 81 und 82 aufzubauen, der über die Bremskreise 12 und 13 zu den einzelnen Radbremsen 20,21,22 und 23 weitergeleitet wird.

Das Betätigen und Lösen der Bremsen funktioniert somit wie bei einem bekannten Unterdruck-Bremskraftverstärker.

Wird während eines Bremsvorganges von einem oder mehreren der Sensoren 25,26,27,28 ein Blockieren des zugeordneten Rades festgestellt, so muß der im Hauptbremszylinder 2 aufgebaute Druck zumindest teilweise abgebaut werden. Es wird angenommen, daß die auf das Bremspedal 3 einwirkende Kraft konstant bleibt. Nachdem der zentralen Regelelektronik 33 von einem der Sensoren die oben erwähnte Blockierneigung, gemeldet wurde, erzeugt diese Umschaltsignale, die ein gleichzeitiges Umschalten sowohl der beiden 2/2-Wegeventile 40,42 der Ventilanordnung 39 und somit ein Belüften der hauptbremszylinderseitigen Arbeitskammer 5 des Unterdruck-Bremskraftverstärkers 1 als auch der Rückhalteventile 46,46' bewirken, so daß die hydraulische Kammer 50 abgesperrt wird und das Bremspedal 3 in der angesteuerten Position stehen bleibt. Da nunmehr auf die bewegliche Wand 7 keine Druckdifferenz einwirkt, (die bremspedalseitige Arbeitskammer 6 steht nach wie vor unter dem Atmosphärendruck) verschwindet auch die dadurch bedingte Verstärkungskraft. Die beschriebene Wegnahme der Verstärkungskraft hat demnach eine Druckreduzierung im Hauptbremszylinder 2 zur Folge. Durch die Verwendung des Drucksensors 24 wird gewährleistet, daß, wenn ein bestimmtes Unterdruckniveau unterschritten wird, die Regelfunktion der erfindungsgemäßen Bremsanlage durch die zentrale Regelelektronik 33 abgeschaltet wird.

Wird nun während eines Anfahrvorgangs von einem oder mehreren der Sensoren 25 bis 28 ein Durchdrehen des zugeordneten Rades festgestellt, so ist es erforderlich, dieses Rad abzubremsen. Nachdem der zentralen Regelelektronik 33 von einem der Sensoren die oben erwähnte Neigung des Rades zum Durchdrehen gemeldet wurde, erzeugt diese ein Steuersignal, das ein gleichzeitiges Umschalten der beiden 2/2-Wegeventile 84 und 85 der zweiten Ventilanordnung 83 bewirkt. Dadurch wird die Verbindung 56 der beiden Arbeits-kammern 5 und 6 des Unterdruck-Bremskraftverstärkers 1 unterbrochen und die zweite Arbeitskammer 6 belüftet, so daß an der beweglichen Wand 7 eine Druckdifferenz entsteht, die deren Bewegung in Richtung auf den Hauptbremszylinder 2 zu zur Folge hat. Diese Bewegung wird auf den Primärkolben 55 des Hauptbremszylinders 2 übertragen, so daß in dessen beiden Druckräumen 81 und 82 ein hydraulischer Druck aufgebaut wird, der über die Bremskreise 12 und 13 zu den einzelnen Radbremsen 20,21,22 und 23 weitergeleitet wird. Dabei wird gewährleistet, daß lediglich das dem durchdrehenden Rad zugeordnete Ventil geöffnet bleibt, während die anderen Radventile geschlossen werden.

Die vorliegende Erfindung ermöglicht auch eine Überwachung der Funktion des die hydraulische Kammer 50 absperrenden Rückhalteventils 46, bei der keine Aktivität des Fahrers erforderlich ist, die jedoch vor allem für einen Antiblockiervorgang sehr wichtig ist. Während des Startens des Fahrzeuges wird durch die zentrale Regelelektronik 33 der Anfahr- schlupfregelvorgang eingesteuert. Bei der darauffol- genden Bewegung der beweglichen Wand 7 bzw. des Zwischenkolbens 79 wird das hydraulische Druckmittel aus dem Ringraum 88 durch das offene Rückhalteventil 46 in den Ausgleichsbehälter Kammer 50 verdrängt, in dem die Durchflußmenge gemessen und somit ein Defekt des Rückhalteventils 46 erkannt und angezeigt werden kann.

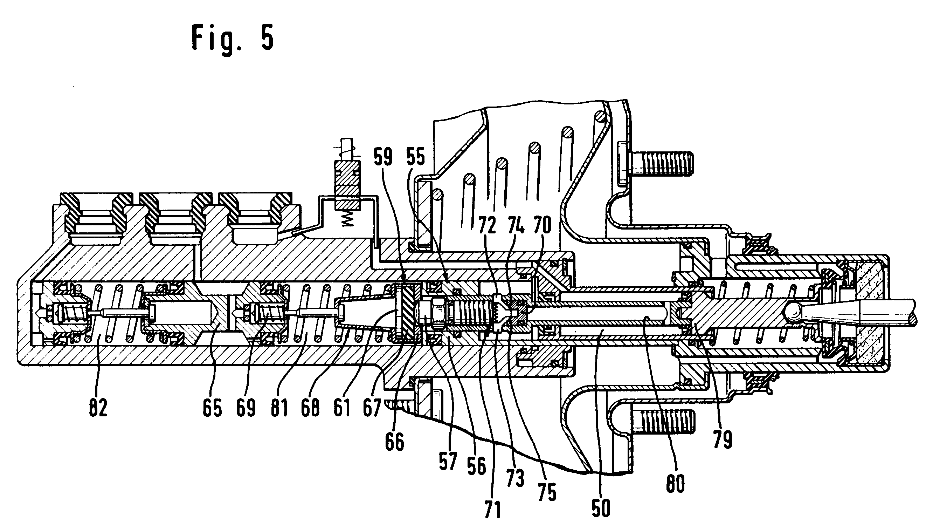

Bei der in Fig. 5 gezeigten Ausführungsform der Baugruppe Unterdruck-Bremskraftverstärker - Tan- dem-Hauptbremszylinder ist die Reaktionseinrich- tung 59 durch eine in einem am Außenkolben 56 anliegenden zylindrischen Körper 66 gelagerte elastische Reaktionsscheibe 67 gebildet, die einerseits in unmittelbarer Berührung mit dem Innenkolben 57 steht und andererseits mittels einer Druckplatte 61 mit dem Öffnungsmechanismus 68 des ersten Zentralventils 69 zusammenwirkt. Der Zwischenkolben 79 weist bei diesem Ausführungsbeispiel eine mit der hydraulischen Kammer 50 in Verbindung stehende axiale Bohrung 80 auf, die eine Druckmittelbeaufschlagung eines an deren Ende angeordneten Betätigungskolbens 70 ermöglicht, der eine die relative Bewegung des Außen- 56 und des Innenkolbens 57 zueinander begrenzende Arretierungsvorrichtung 71 mechanisch betätigt. Die Arretierungsvorrichtung 71 besteht aus mindestens zwei symmetrisch gegenüberliegend angeordneten, federnd vorgespannten Segmenten 72,73, die mittels zweier am Betätigungskolben 70 ausgebildeten Schrägen 74,75 vertikal bewegt werden können. Dadurch wird bei einer Normalbremsung der eingangs erwähnte Verlustweg weitgehend eliminiert, wobei jedoch gewährleistet ist, daß im Regelfall die Wirkung der Arretierungsvorrichtung 71 aufgehoben wird.

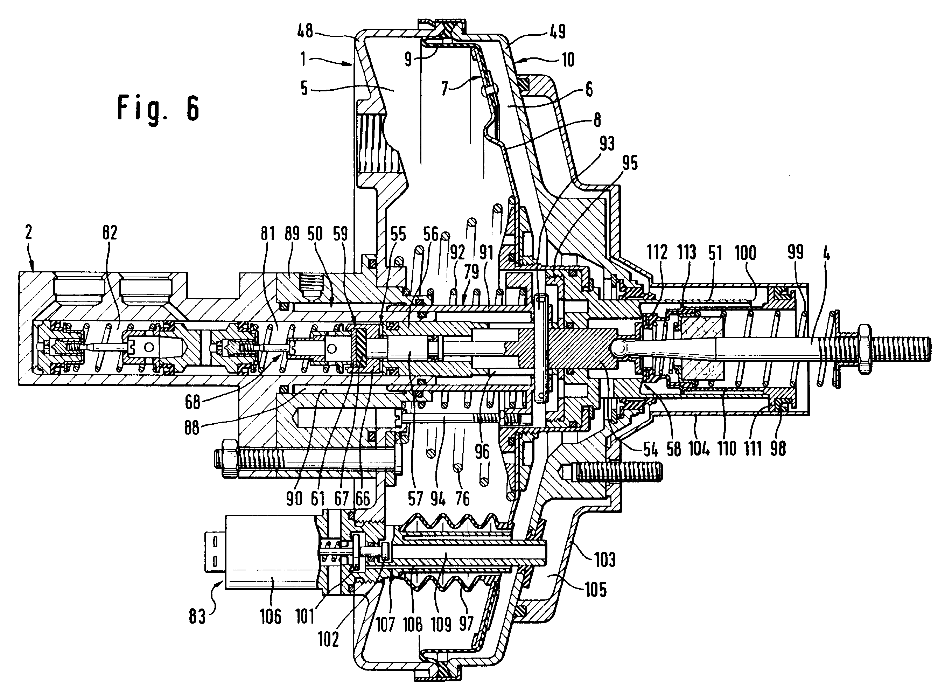

Bei dem in Fig. 6 gezeigten dritten Ausführungsbeispiel der bei der erfindungsgemäßen Kraftfahr- zeug- bremsanlage nach Fig. 1 verwendeten Baugruppe Un- terdruck-Bremsbkraftverstärker - Tandem-Hautp- bremszylinder ist der Tandemhauptzylinder 2 mit dem in der Zeichnung links gezeichneten Gehäuseteil 48 mittels eines Zwischenstückes 89 verbunden. Die z.B. im Zusammenhang mit Fig. 2 erwähnte hydraulische Kammer 50 ist durch einen Ringraum 88 gebildet, der einerseits durch die Wandung einer im Zwischenstück 89 vorgesehenen Bohrung 90 und andererseits durch den in diese Bohrung 90 eingeschobenen Tandem-Hauptbremszylinder 2 begrenzt ist.

Der in Richtung auf die bewegliche Wand 7 zu durch eine Druckfeder 92 vorgespannte, als ein Ringkolben 91 ausgebildete Zwischenkolben 79 ist mittels eines Querstiftes 93 mit dem Ventilkolben 54 verbunden und über eine Fesselungsschraube 94 am in der Zeichnung linken Gehäuseteil 48 gefesselt. Der Ventilkolben 54 bildet an seinem hauptbremszylinderseitigen Ende einen Teil (Innenkolben 57) des den Primärdruckraum 81 begrenzenden Primärkolbens 55, dessen zweiter Teil (Außenkolben 56) über einen am Steuerventilgehäuse 51 axial anliegenden zylindrischen Topfteil 95 am Steuerventilgehäuse 51 abgestützt ist. Der Außenkolben 56 ist mit einer Ausnehmung 96 versehen, die eine Relativbewegung der beiden Primärkolbenteile 56,57 zueinander ermöglicht.

Das bremspedalseitige Gehäuseteil 49 begrenzt zusammen mit einem daran befestigten Flansch 103 einen pneumatischen Ringraum 105. Der Flansch 103 weist dabei einen axialen Fortsatz 104 auf, der einen aus dem Verstärkergehäuse 10 herausragenden Teil des Steuerventilgehäuses 51 radial umgibt. Ins Steuerventilgehäuse 51 ist eine metallische Hülse 110 eingeschoben, die am Steuerventilgehäuse 51 axial abgestützt ist und die im axialen Fortsatz 104 mittels eines Führungsbundes 111 geführt ist. Um den Ringraum 105 nach außen hin abzudichten, ist der Führungsbund 111 mit einer Dichtmanschette 98 versehen. An ihrem ins Innere des Steuerventilgehäuses 51 hineinragenden Ende trägt die Hülse 111 einen elastischen Tellerventilkörper 112, der als Schließkörper mit je einem am Ventilkolben 54 bzw. am Steuerventilgehäuse 51 ausgebildeten Dichtsitz zusammenwirkt und mit diesen Dichtsitzen die Ventilanordnung 58 bildet. Die Hülse 110 ist in diesem Bereich mit Führungslaschen 113 versehen, die zu deren besserer Führung im Steuerventilgehäuse 51 beitragen. Im Bereich der Abstützung der Hülse 110 am Steuerventilgehäuse 51 ist das Steuerventilgehäuse 51 an seinem Umfang mit Ausschnitten 100 versehen, die dessen Innenraum mit dem pneumatischen Ringraum 105 verbinden. An der Stirnseite des durch die Hülse 110 gehaltenen Tellerventilkörpers 112 stützt sich eine Kolbenstangen-Rückstellfeder 99 ab, die für eine Vorspannung des am Ventilkolben 54 ausgebildeten Dichtsitz gegenüber der Dichtfläche des Tellerventilkörpers 112 sorgt.

Die im Zusammenhang mit Fig. 1 erwähnte zweite Ventilanordnung 83 ist im dargestellten Beispiel durch ein am vorderen Gehäuseteil 48 angebrachtes, elektromagnetisch betätigbares 4/2-Wegeventil 106 gebildet, welches mit zwei plattenförmigen, koaxial angeordneten Dichtkörpern 101,102 ausgestattet ist, die mit zwei entsprechend ausgebildeten Dichtsitzen zusammenwirken. Dadurch werden zwei koaxial zueinander angeordnete, sich durch das Verstärkergehäuse 10 hindurch erstreckende pneumatische Kanäle 108,109 abgesperrt bzw. freigegeben, wobei der radial innenliegende Kanal 109 in der ersten Arbeitskammer 5 sowie im Ringraum 105 mündet und die im Zusamenhang mit der Fig. 1 erwähnte Verbindung 86 zwischen der ersten 5 und der zweiten Arbeitskammer 6 darstellt, während der zweite, radial außen liegende Kanal 108 für eine direkte Verbindung 107 der zweiten Arbeitskammer 6 mit der Atmosphäre sorgt, die in Fig. 1 mit dem Bezugszeichen 72 versehen ist. Um eine Trennung der beiden Arbeitskammern 5 und 6 im Bereich der pneumatischen Kanäle 108,109 zu erreichen, ist ein Faltenbalg 97 vorgesehen, der einerseits im Membranteller 8 und andererseits in der Nähe der Mündung des Kanals 109 am Ventil 106 eingeknöpft ist.

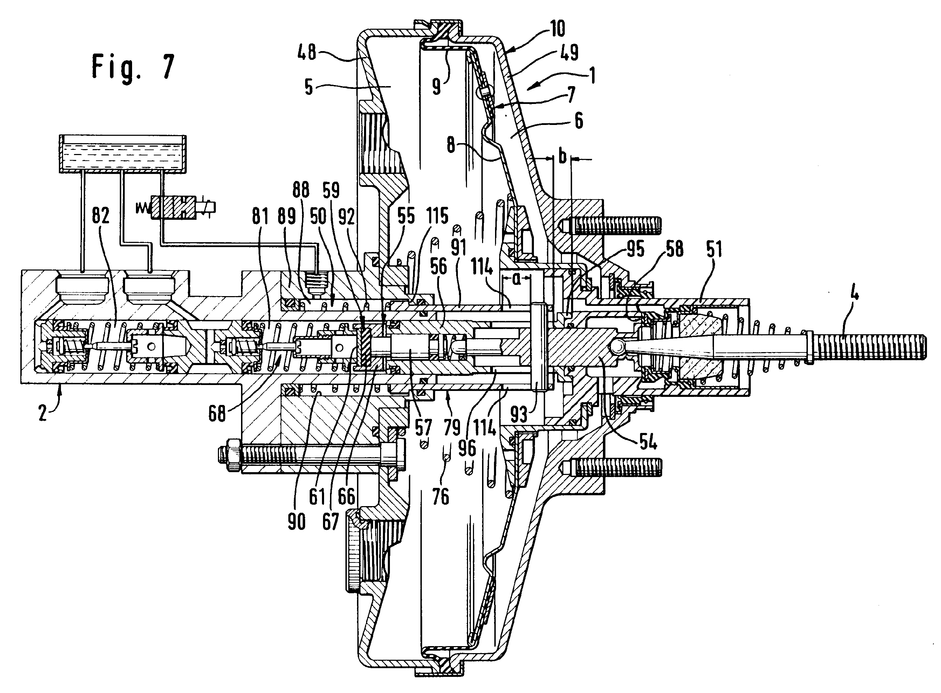

Bei dem in Fig. 7 dargestellten Unterdruck-Bremskraftverstärker 1 schlägt der in Richtung auf die bewegliche Wand 7 zu durch die in der hydraulischen Kammer 50 angeordnete Druckfeder 92 vorgespannte Zwischenkolben 79 (Ringkolben 91) in der Ruhestellung an einer am Zwischenstück 89 ausgebildeten Ringfläche 115 an und ist an seinem der beweglichen Wand 7 zugewandten Ende mit axial verlaufenden Schlitzen 114 versehen, die ein durch den Ventilkolben 54 hindurchragendes Kraftübertragungselement (Querstift 93) führen. Die Länge der Schlitze 114 ist vorzugsweise so bemessen, daß das Eingangsglied 4 bzw. der Ventilkolben 54 einen bestimmten begrenzten Weg in Betätigungsrichtung zurücklegen kann, bevor das Kraftübertragungselement zur Anlage am Zwischenkolben 79 kommt. Die Anordnung ist dabei vorzugsweise derart getroffen, daß das Ende des Zwischenkolbens 79 in einem Abstand $b$ von der beweglichen Wand 7 bzw. dem mit ihr fest verbundenen Steuerventilgehäuse 51 angeordnet ist, der im dargestellten Beispiel kleiner ist als die Länge a der Schlitze 114, so daß der Zwischenkolben 79 bei der Betätigung von der beweglichen Wand 7 mitgenommen werden kann. Infolgedessen tritt in einem Blockierregelfall ein Durchfallen des Eingangsgliedes 4 bzw. 54 auf, dessen Ausmaß der Differenz (b-a) entspricht.

Denkbar ist jedoch auch eine Anordnung, bei der der axiale Abstand $a$ zwischen dem Kraftübertragungselement 93 und dem Zwischenkolben 79 kleiner ist als der Abstand $b$ zwischen der beweglichen Wand 51 bzw. 12 und dem Zwischenkolben 79.

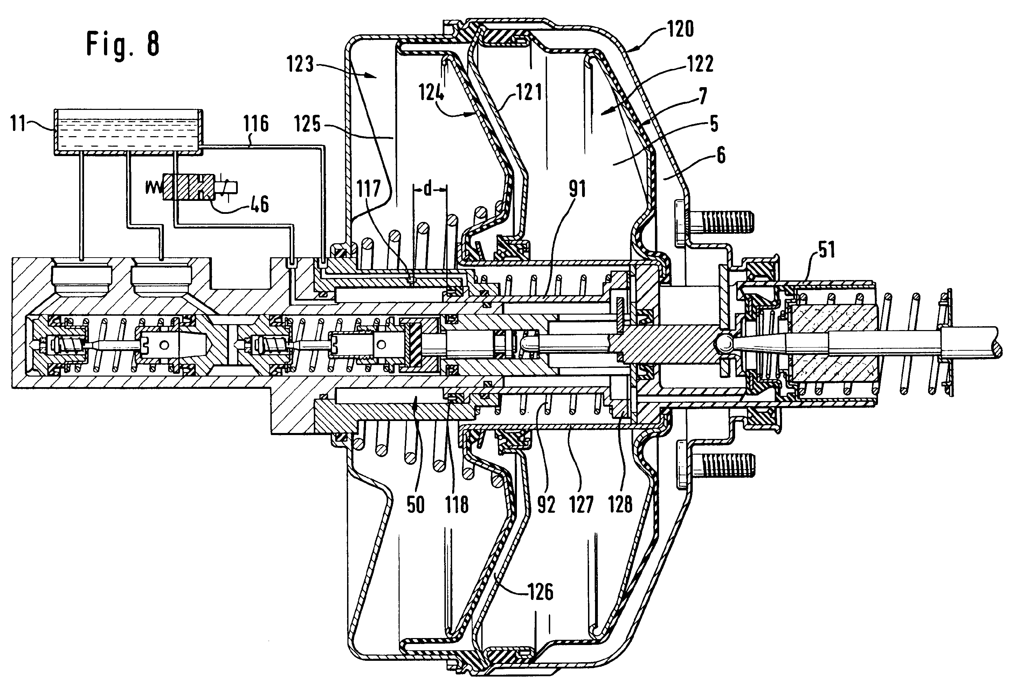

Bei dem in Fig. 8 gezeigten Ausführungsbeispiel ist als Unterdruck-Bremskraftverstärker 1 ein Bremskraftverstärker in Tandembauweise vorgesehen, dessen Gehäuse 120 durch eine Trennwand 121 in zwei pneumatische Räume 122 und 123 unterteilt ist. Während der erste pneumatische Raum 122 dem Innenraum des Verstärkergehäuses 10 des in Fig. 2 gezeigten Unterdruck-Bremskraftverstärkers 1 entspricht, ist der zweite pneumatische Raum 123 durch eine mit dem Bezugszeichen 124 versehene zweite bewegliche Wand in eine dritte, mit der ersten Arbeitskammer 5 in Verbindung stehende Arbeitskammer 125 sowie eine vierte, mit der zweiten Arbeitskammer 6 in Verbindung stehende Kammer 126 unterteilt. Die Übertragung der von der zweiten beweglichen Wand 124 aufgebrachten Verstärkungskraft auf das mit dem (Primär-)Außenkolben 56 des Tandemhauptzylinders 2 in Wirkverbindung stehende Steuerventilgehäuse 51 erfolgt mittels einer durch die Trennwand 121 abgedichtet hindurchgeführten metallischen Hülse 127. Der Ringkolben 91 ist bei diesem Ausführungsbeispiel an seinem dem Steuerventilgehäuse 51 zugewandten Ende mit einem radialen Kragen 128 versehen, der einerseits als Abstützfläche für die den Ringkolben 91 vorspannende Druckfeder 92 dient und andererseits an der Stirnfläche des Steuerventilgehäuses 51 axial anliegt, so daß zwischen dem Steuerventilgehäuse 51 und dem Ringkolben 91 eine kraftübertragende Verbindung besteht.

Wie der Fig. 8 zu entnehmen ist, ist zusätzlich zu der im Zusammenhang mit Fig. 1 erwähnten, mittels des Rückhalteventils 46 absperrbaren Verbindung zwischen der hydraulischen Kammer 50 und dem Druckmittelvorratsbehälter 11 eine zweite Verbindung 116 vorgesehen, die bei der Betätigung des Tandem-Bremskraftverstärkers durch den Ringkolben 11 absperrbar ist. Zu diesem Zweck schließt an die schematisch dargestellte zweite Verbindung 116 eine Öffnung (Schnüffelloch) 117 an, die in der hydraulischen Kammer 50 mündet und mit einem im vorderen Bereich des Ringkolbens 91 angebrachten Dichtelement 118 (Dichtmanschette) zusammenwirkt. Die Öffnung 117 ist dabei vorzugsweise in einem Abstand d vom Dichtelement 118 angeordnet, der funktionsmäßig dem im Zusammenhang mit Fig. 7 erwähnten Abstand $b$ entspricht, so daß die zweite Verbindung 116 erst dann abgesperrt werden kann, wenn der Ringkolben 91 einen dem Abstand $d$ entsprechenden Weg zurückgelegt hat. Um das kraftlose Durchfallen des Eingangsglieds 4 in einem Blockierregelfall wirksam zu dämpfen, kann die Öffnung 117 als eine Drosselbohrung ausgebildet sein.

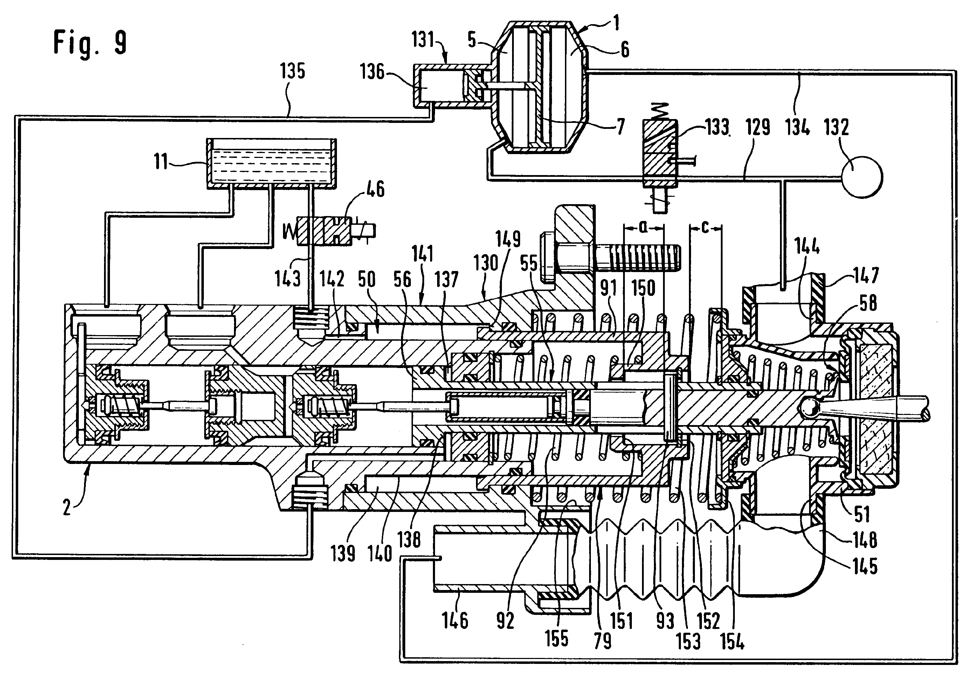

Bei der in Fig. 9 gezeigten Ausführungsvariante der erfindungsgemäßen Betätigungseinheit bilden der Hauptbremszylinder 2, die hydraulische Kammer 50, der darin geführte Ringkolben 91 sowie die durch das Steuerventilgehäuse 51 und das Steuerventil 58 gebildete Steuergruppe eine bauliche Einheit 130, die örtlich vom Bremskraftverstärker 1 getrennt angeordnet ist. Bei dem Bremskraftverstärker 1 handelt es sich um einen Unterdruck-Bremskraftverstärker herkömmlicher Bauart, bei dem das mechanische oder hydrauliche Steuerteil fehlt und dem ein Hilfshauptzylinder 131 nachgeschaltet ist.

Mit 129 ist eine Unterdruckleitung bezeichnet, die Unterdruck vom Ansaugstutzen des Verbrennungsmotors 132 des Fahrzeugs (oder einer anderen geeigneten Unterdruckquelle) zur Unterdruckkammer 5 des Bremskraftverstärkers 1 und zur unter näher beschriebenen Einheit 130 leitet. Die Unterdruckkammer 5 ist an die Unterdruckleitung 129 über ein pneumatisches 3/2-Wegeventil 133 angeschlossen, das in einem Regelfall ein Belüften der Unterdruckkammer 5 ermöglicht.

Mit 134 ist die Leitung für den gesteuerten pneumatischen Druck bezeichnet, während die Leitung 135 geregelten hydraulischen Druck führt und den Druckraum 136 des Hilfshauptzylinders 131 mit einem im Hauptbremszylinder 2 ausgebildeten Ringraum 137 verbindet. Der Ringraum 137 wird durch eine am Außenkolben 56 ausgebildete Ringfläche 138 begrenzt und bildet mit ihr einen hydraulischen Verstärker. Die hydraulische Kammer 50 ist im dargestellten Beispiel durch einen ringförmigen Raum 139 gebildet, der zwischen einem einen Teil 140 des Hauptbremszylinders 2 radial umgreifenden Flanschteil 141 und der Oberfläche dieses Hauptzylinderteiles 140 begrenzt ist, und steht über einen Druckmittelkanal 142 sowie eine hydraulische Leitung 143 in Verbindung mit dem lediglich schematisch gezeigten drucklosen Druckmittelvorratsbehälter 11, wobei diese Verbindung in einem Regelfall mittels des in der Leitung 143 eingeschalteten Rückhalteventils 46 absperrbar ist.

Das unverschiebbar auf dem Außenkolben 56 befestigte Steuerventilgehäuse 51 weist zwei pneumatische Anschlüsse 144 und 145 auf, von denen der erstgenannte (144) an einen am Flanschteil 141 ausgebildeten, in der Zeichnung nicht gezeigten Anschlußstutzen angeschlossen ist, der mit der Unterdruckleitung 129 in Verbindung steht, während der zweite (145) mit einem zweiten am Flanschteil 141 ausgebildeten Anschlußstutzen 146 in Verbindung steht, an den die Leitung 134 für den angesteuerten pneumatischen Druck angeschlossen ist. Die am Steuerventilgehäuse 51 vorzugsweise radial gegenüberliegend ausgebildeten Anschlüsse 144 und 145 stehen mit den Anschlußstutzen am Flanschteil 141 über elastische Verbindungselemente 147, 148, beispielsweise Faltenbälge, in Verbindung. Durch diese Anordnung wird ein Evakuieren bzw. ein dosierbares Belüften der Arbeitskammer 6 des Bremskraftverstärkers 1 ermöglicht.

Der an einem im Flanschteil 141 ausgebildeten Anschlag 149 axial anliegende, durch die Druckfeder 92 vorgespannte als Ringkolben 91 ausgeführte Zwischenkolben 79 ist an seinem dem Steuerventilgehäuse 51 zugewandten Ende mit einer axialen Nabe 150 versehen, die als Führung für die Druckfeder 92 dient und einen Anschlagbund 151 aufweist, mit dem das durch den Primärkolben 55 radial hindurchragende Kraftübertragungselement (Querstift 93) zusammenwirkt. Das Kraftübertragungselement 93 liegt in Ruhestellung an einem Anschlag bzw. Sicherungsring 152 an, der in die Wandung der Nabe 150 eingesetzt ist.

Um eine Übertragung der vom Bremskraftverstärker 1 aufgebrachten Verstärkungskraft auf den Zwischenkolben 79 erst dann, wenn der Primärkolben 55 bzw. das Steuerventilgehäuse 51 einen bestimmten begrenzten Weg zurückgelegt hat, zu ermöglichen, befindet sich die Stirnfläche des Steuerventilgehäuses 51 in einem Abstand $\underline{c}$ vom Ende des Zwischenkolbens 79, wobei der Abstand c im gezeigten Ausführungsbeispiel kleiner gewählt ist, als der Abstand $\underline{a}$ zwischen dem Querstift 93 und der am Anschlagbund 151 ausgebildeten Ringfläche.

Um einen vollständigen Abbau des im Tandem-Hauptbremszylinder 2 angesteuerten hydraulischen Druckes zu erzielen ist schließlich eine Druckfeder 153 vorgesehen, die einerseits an einem am Steuerventilgehäuse 51 befestigten Federteller 154 und andererseits am Boden einer im Flanschteil 141 vorgesehenen Ausnehmung 155 abgestützt ist.

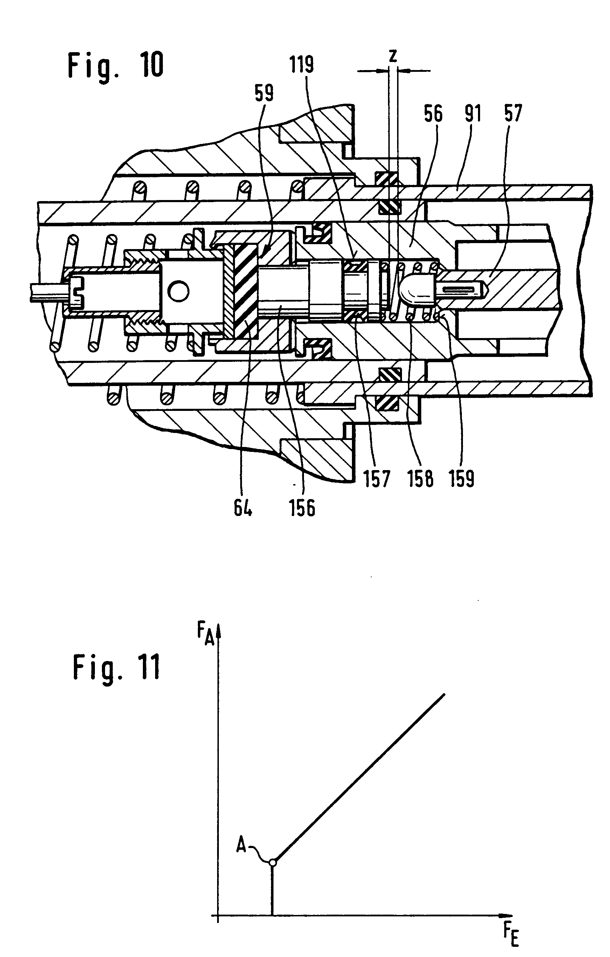

Wie schließlich der Fig. 10 zu entnehmen ist, wirkt der Innenkolben 57 bei den in Fig. 7 und 8 gezeigten Ausführungen mit einem Kraftübertragungsglied 156 zusammen, welches von ihm in einem Abstand $\underline{z}$ angeordnet ist, an der Reaktionsscheibe 64 axial anliegt und in der den Innenkolben 57 aufnehmenden Bohrung 119 des Außenkolbens 56 verschiebbar geführt ist. Das Kraftübertragungsglied 116, dessen in der Zeichnung linke Stirnfläche mit dem im Primärdruckraum herrschenden hydraulischen Druck beaufschlagbar ist, ist gegenüber der Wandung der Bohrung 119 mittels einer Dichtmanschette 157 abgedichtet, wobei seine andere Stirnfläche als Anlagefläche für eine Druckfeder 158 dient, die sich an einer am Außenkolben 56 ausgebildeten radialen Ringfläche 159 abstützt und sich im Einbauzustand, in gestreckter Länge, d.h. ohne Vorspannung, befindet. Die Federkraft der Druckfeder 18 wirkt der aus dem hydraulischen Druck im Primärdruckraum 81 resultierenden Reaktionskraft entgegen und bestimmt die Höhe des sprunghaften Anstiegs der Ansprechcharakteristik (Fig. 11).

Der beim Bremsen auf die Stirnfläche des Kraftübertragungselementes 156 wirkende Druck hat eine Verschiebung des Kraftübertragungsglied 156 entgegen der Betätigungsrichtung bzw. entgegen der Federkraft der Druckfeder 158 zur Folge. Wird die Federkraft dieser Druckfeder 158 überwunden, so kommt das Kraftübertragungsglied 156 zur Anlage am Innenkolben 14 (Punkt A in Fig 11), so daß die aus dem hydraulischen Druck im Primärdruckraum 81 resultierende Reaktionskraft am Betätigungsglied 4 zu spüren ist. Durch Variieren der Federkraft der Druckfeder 158 kann jedes gewünschte Ansprechverhalten des Bremskraftverstärkers eingestellt werden.

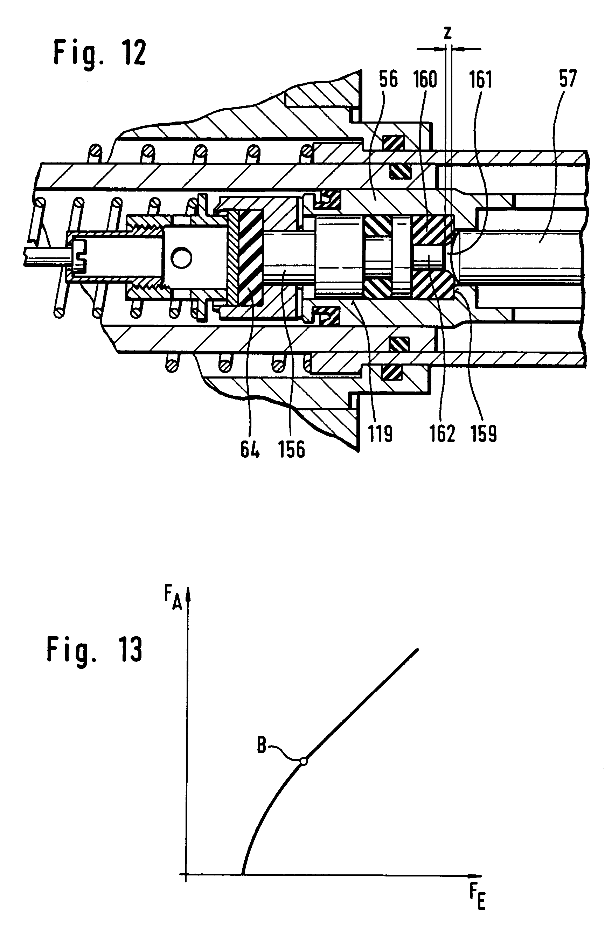

Wird nun eine Ansprechcharakteristik mit dem in Fig. 13 gezeigten Verlauf gewünscht ("gerundete Kennlinie") die von Anfang an eine geringe Rückwirkung am Betätigungselement 4 gewährleistet, die solange kontinuierlich steigt, bis die volle Übersetzung des Bremskraftverstärkers erreicht ist (Punkt B in Fig. 13), so wird als die erste Reaktionsvorrichtung die in Fig. 12 gezeigte Anordnung eingesetzt. Bei dieser Anordnung ist zwischen dem Kraftübertragungselement 156 und dem Ende des Innenkolbens 57 eine Gummifeder 160 angeordnet, die an ihrer dem Innenkolben 57 zugewandten Stirnfläche mit einer konischen Ausnehmung 161 versehen ist. Das Ende des Innenkolbens 57 ist dabei vorzugsweise kalotten- bzw. kegelstumpfförmig ausgebildet und kann in Ruhestellung die Gummifeder 160 leicht berühren oder in geringem axialem Abstand davon angeordnet sein. Um die Gummifeder 160 von erhöhtem Verschleiß zu schützen, weist das Kraftübertragungselement 156 an seiner der Gummifeder 160 zugewandten Stirnfläche einen axialen Fortsatz 162 auf, der sich durch die Gummifeder 160 hindurch erstreckt und dessen Länge so bemessen ist, daß zwischen ihm und dem Ende des Innenkolbens 57 der vorhin erwähnte Abstand $\underline{z}$ vorhanden ist. Die Außenkontur der Gummifeder 160 ist vorzugsweise so gewählt, daß bei einer durch das Kraftübertragungselement 156 aufgebrachten Kraft lediglich eine Teilanlage am Innenkolben 57 stattfindet, wobei bei einer Krafterhöhung die Anlagefläche und somit die übertragbare Reaktionskraft größer wird. Die Erhöhung der Kraft bzw. die Vergrößerung der Anlagefläche wird durch den direkten mechanischen Kontakt zwischen dem Innenkolben 57 und dem axialen Fortsatz 162 begrenzt.

Bezugszeichenliste

| | |
|---|---|
| 1 | Unterdruck-Bremskraftverstärker |
| 2 | Hauptbremszylinder |
| 3 | Bremspedal |
| 4 | Eingangsglied |
| 5 | erste Arbeitskammer |
| 6 | zweite Arbeitskammer |
| 7 | bewegliche Wand |
| 8 | Membranteller |
| 9 | Rollmembran |
| 10 | Verstärkergehäuse |
| 11 | Druckmittelvorratsbehälter |
| 12 | Bremsleitung |
| 13 | Signalleitung |
| 14 | Magnetventil |
| 15 | Magnetventil |
| 16 | Magnetventil |
| 17 | Magnetventil |
| 18 | Unterdruckquelle |
| 19 | Signalleitung |
| 20 | Radbremse |
| 21 | Radbremse |
| 22 | Radbremse |
| 23 | Radbremse |
| 24 | Drucksensor |
| 25 | Sensor |
| 26 | Sensor |
| 27 | Sensor |
| 28 | Sensor |
| 29 | Signalleitung |
| 30 | Signalleitung |
| 31 | Signalleitung |
| 32 | Signalleitung |
| 33 | zentrale Regelelektronik |
| 34 | Steuerleitung |
| 35 | Steuerleitung |
| 36 | Steuerleitung |
| 37 | Steuerleitung |
| 38 | pneumatische Leitung |
| 39 | Ventilanordnung |
| 40 | 2/2-Wegeventil |
| 41 | Rückschlagventil |
| 42 | 2/2-Wegeventil |
| 43 | pneumatische Leitung |
| 44 | Steuerleitung |
| 45 | Steuerleitung |
| 46 | Rückhalteventil |
| 46' | Rückhalteventil |
| 47 | Steuerleitung |
| 48 | Gehäuseteil |
| 49 | Gehäuseteil |
| 50 | hydraulische Kammer |
| 51 | Steuergehäuse |
| 52 | Verlängerung |
| 53 | Führungsstutzen |
| 54 | Ventilkolben |
| 55 | Primärkolben |
| 56 | Außenkolben |
| 57 | Innenkolben |
| 58 | Steuerventil |
| 59 | Reaktionseinrichtung |
| 60 | Längsbohrung |
| 61 | Druckplatte |
| 62 | Ringfläche |
| 63 | Ringfläche |
| 64 | Reaktionsscheibe |
| 65 | Sekundärkolben |
| 66 | zylindrischer Körper |
| 67 | Reaktionsscheibe |
| 68 | Öffnungsmechanismus |
| 69 | Zentralventil |
| 70 | Betätigungskolben |
| 71 | Arretierungsvorrichtung |
| 72 | Segment |
| 73 | Segment |
| 74 | Schräge |
| 75 | Schräge |
| 76 | Rückstellfeder |
| 77 | Zentralventil |
| 78 | zylindrisches Teil |
| 79 | Zwischenkolben |
| 80 | Bohrung |
| 81 | Primärdruckraum |
| 82 | Sekundärdruckraum |
| 83 | Ventilanordnung |
| 84 | 2/2-Wegeventil |
| 85 | 2/2-Wegeventil |
| 86 | Verbindung |
| 87 | Steuerleitung |
| 88 | Ringraum |
| 89 | Zwischenstück |
| 90 | Bohrung |
| 91 | Ringkolben |
| 92 | Druckfeder |
| 93 | Querstift |
| 94 | Fesselungsschraube |

| 95 | zylindrisches Topfteil |
|---|---|
| 96 | Ausnehmung |
| 97 | Faltenbalg |
| 98 | Dichtmanschette |
| 99 | Rückstellfeder |
| 100 | Ausschnitt |
| 101 | Dichtkörper |
| 102 | Dichtkörper |
| 103 | Flansch |
| 104 | Fortsatz |
| 105 | pneumatischer Raum |
| 106 | 4/2-Wegeventil |
| 107 | Verbindung |
| 108 | Kanal |
| 109 | Kanal |
| 110 | Hülse |
| 111 | Führungsbund |
| 112 | Tellerventilkörper |
| 113 | Lasche |
| 114 | Schlitz |
| 115 | Ringfläche |
| 116 | zweite Verbindung |
| 117 | Öffnung (Schnüffelloch) |
| 118 | Dichtelement, Dichtmanschette |
| 119 | Bohrung |
| 120 | Gehäuse |
| 121 | Trennwand |
| 122 | pneumatischer Raum |
| 123 | pneumatischer Raum |
| 124 | bewegliche Wand |
| 125 | dritte Arbeitskammer |
| 126 | vierte Arbeitskammer |
| 127 | Hülse |
| 128 | Kragen |
| 129 | Unterdruckleitung |
| 130 | bauliche Einheit |
| 131 | Hilfshauptzylinder |
| 132 | Verbrennungsmotor |
| 133 | 3/2-Wegeventil |
| 134 | Leitung |
| 135 | Leitung |
| 136 | Druckraum |
| 137 | Ringraum |
| 138 | Ringfläche |
| 139 | Raum |
| 140 | Teil |
| 141 | Flanschteil |
| 142 | Druckmittelkanal |
| 143 | Leitung |
| 144 | pneumatischer Anschluß |
| 145 | pneumatischer Anschluß |
| 146 | Anschlußstutzen |
| 147 | Verbindungslement, Faltenbalg |
| 148 | Verbindungselement, Faltenbalg |
| 149 | Anschlag |
| 150 | Nabe |
| 151 | Anschlagbund |
| 152 | Anschlag, Sicherungsring |

| 153 | Druckfeder |
|---|---|
| 154 | Federteller |
| 155 | Ausnehmung |
| 156 | Kraftübertragungsglied |
| 157 | Dichtmanschette |
| 158 | Druckfeder |
| 159 | Ringfläche |
| 160 | Gummifeder |
| 161 | Ausnehmung |
| 162 | Fortsatz |

**Patentansprüche**

1. Blockiergeschützte Kraftfahrzeugbremsanlage mit einem wirkungsmäßig zwischen Bremspedal (3) und Hauptbremszylinder (2) angeordneten Unterdruck-Bremkraftverstärker (1) mit zumindest zwei durch eine bewegliche Wand (7) voneinander getrennten Arbeitskammern (5,6), von denen die erste (5) mit einer Unterdruckquelle (18) verbindbar und die zweite über ein mittels eines mit dem Bremspedal (3) gekoppelten Eingangsglieds (4) betätigbares Steuerventil (58) belüftbar ist, um eine zur Bremspedalkraft proportionale Verstärkungskraft zu erzeugen, wobei die erste Arbeitskammer (5) in einem Schlupfregelfall mittels einer ersten Ventilanordnung (39) belüftbar ist und an einen Primär (81)- und einen Sekundärdruckraum (82) des Hauptbremszylinders (2) über Bremsleitungen (12, 13) Radbremszylinder (20-23) angeschlossen sind, mit den zu bremsenden Rädern zugeordneten Sensoren (25-28), die das Drehverhalten der Räder erfassen, um ein Blockieren festzustellen, und deren Ausgangssignale (29-32) einer zentralen Regelelektronik (33) zuführbar sind, mit deren Steuersignalen (34-37) zur Schlupfregelung in die Bremsleitungen (12,13) eingefügte elektromagnetisch betätigbare Druckmittel-Einlaß- und Auslaßventile (14-17) steuerbar sind, dadurch **gekennzeichnet**, daß die bewegliche Wand (7) des Unterdruck-Bremskraftverstärkers (1) unabhängig vom Eingangsglied (4) bewegbar ist, und daß eine mit dem Eingangsglied (4) in Wirkverbindung stehende hydraulische Kammer (50) vorgesehen ist, deren Verbindung (90) mit einem drucklosen Druckmittelvorratsbehälter (11) absperrbar (46,46′) ist.

2. Kraftfahrzeugbremsanlage nach Anspruch 1, dadurch **gekennzeichnet**, daß die hydraulische Kammer (50) in einem eine, in die erste Arbeitskammer (5) des Unterdruck-Bremskraftverstärkers (1) hineinragende axiale Verlängerung (52) des Hauptbremszylinders (2) verschließenden zylindrischen Teil (78) ausgebildet ist.

3. Kraftfahrzeugbremsanlage nach Anspruch 1, dadurch **gekennzeichnet**, daß die Verbindung (90) der hydraulischen Kammer (50) mit dem Druckmittelvorratsbehälter (11) mittels mindestens eines Rückhalteventils (46) absperrbar ist.

4. Kraftfahrzeugbremsanlage nach Anspruch 3, dadurch **gekennzeichnet**, daß das Rückhalteventil (46) als ein stromlos offenes Elektromagnetventil ausgebildet ist, das durch Ausgangssignale der zentralen Regelelektronik (33) erregbar ist.

5. Kraftfahrzeugbremsanlage nach Anspruch 1 bis 4, dadurch **gekennzeichnet**, daß in der Kammer (50) ein Zwischenkolben (79) verschiebbar geführt ist, der einerseits mit dem Eingangsglied (4) und andererseits mit einem Primärkolben (55) des Hauptbremszylinders (2) zusammenwirkt.

6. Kraftfahrzeugbremsanlage nach einem der vorhergehenden Ansprüche, dadurch **gekennzeichnet**, daß der Primärkolben (55) durch einen in der Längsbohrung (60) des Hauptbremszylinders (2) axial geführten, mit der beweglichen Wand (7) in Verbindung stehenden Außenkolben (56) sowie einen darin geführten, Innenkolben (57) gebildet ist.

7. Kraftfahrzeugbremsanlage nach Anspruch 6, dadurch **gekennzeichnet**, daß der Innenkolben (57) als Tauchkolben an dem dem Hauptbremszylinder (2) zugewandten Ende des Zwischenkolbens (79) ausgebildet ist.

8. Kraftfahrzeugbremsanlage nach einem der Ansprüche 1 bis 6, dadurch **gekennzeichnet**, daß im Primärdruckraum (81) eine Reaktionseinrichtung (59) angeordnet ist, die bei Ausfall des daran angeschlossenen Bremskreises (12) im Sekundärdruckraum (82) einen der Eingangskraft proportionalen Druckaufbau nach einer vorher festgelegten Charakteristik ermöglicht.

9. Kraftfahrzeugbremsanlage nach Anspruch 8, dadurch **gekennzeichnet**, daß die Reaktionseinrichtung (59) durch je eine am Außenkolben (56) bzw. Innenkolben (57) ausgebildete Ringfläche (62,63) gebildet ist, die mit einem vorzugsweise am Sekundärkolben (65) angeordneten ringförmigen elastischen Reaktionskörper (64) zusammenwirken.

10. Kraftfahrzeugbremsanlage nach Anspruch 8, dadurch **gekennzeichnet**, daß die Reaktionseinrichtung (59) durch eine in einem zylindrischen Körper (66) angeordnete elastische Reaktionsscheibe (67) gebildet ist, die mit dem Außenkolben (56) über den zylindrischen Körper (66) und mit dem Innenkolben (57) direkt in Wirkverbindung steht, und an deren dem Primärkolben (55) abgewandter Seite eine Druckplatte (61) anliegt, an der ein Teil eines Öffnungsmechanismus (68) eines ersten Zentralventils (69) abgestützt ist.

11. Kraftfahrzeugbremsanlage nach einem der vorhergehenden Ansprüche, dadurch **gekennzeichnet**, daß der Zwischenkolben (79) mit einer mit der hydraulichen Kammer (50) in Verbindung stehenden axialen Bohrung (80) versehen ist, an deren dem Primärkolben (55) zugewandten Ende ein Betätigungskolben (70) vorgesehen ist, der eine Arretierungsvorrichtung (71) betätigt, die die relative Bewegung des Außen- und Innenkolbens (56,57) zueinander begrenzt.

12. Kraftfahrzeugbremsanlage nach Anspruch 11, dadurch **gekennzeichnet**, daß die Arretierungsvorrichtung (71) durch mindestens zwei symmetrisch gegenüberliegend angeordnete, abgefederte Segmente (72,73) gebildet ist, die, mit am Betätigungskolben (70) ausgebildeten Schrägen (74,75) zusammenwirkend, radial bewegbar sind.

13. Kraftfahrzeugbremsanlage nach Anspruch 1, dadurch **gekennzeichnet**, daß die Verbindung (90) der hydraulischen Kammer (50) mittels zweier parallel geschalteter Rückhalteventile (46,46′) absperrbar ist, wobei die einzelnen Parallelzweige der Verbindung (90) an je einen Druckmittelraum (93,94) angeschlossen sind, deren Füllstandsänderungen durch je eine Meßvorrichtung (91,92) meßbar sind, deren Ausgangssignale miteinander verglichen werden und bei Feststellen einer Abweichung ein Differenzsignal gebildet wird, das eine Warneinrichtung aktiviert.

14. Kraftfahrzeugbremsanlage nach Anspruch 13, dadurch **gekennzeichnet**, daß die Druckmittelräume (93,94) innerhalb des Druckmittelvorratsbehälters (11) vorgesehen sind.

15. Kraftfahrzeugbremsanlage nach Anspruch 13 oder 14, dadurch **gekennzeichnet**, daß die Meßeinrichtung (91 bzw. 92) durch einen Schwimmer (95) gebildet ist, der einen mit einer Spule (97) zusammenwirkenden ferromagnetischen Kern (96) trägt.

16. Kraftfahrzeugbremsanlage nach einem der vorhergehenden Ansprüche, dadurch **gekennzeichnet**, daß eine zweite Ventilanordnung (83) vorgesehen ist, die eine zusätzliche, vom Eingangsglied (4) unabhängige Verbindung der zweiten Arbeitskammer (6) mit der Atmosphäre unter gleichzeitigem Absperren der Verbindung (86) der ersten (5) und der zweiten Arbeitskammer (6) ermöglicht.

17. Kraftfahrzeugbremsanlage nach Anspruch 16, dadurch **gekennzeichnet**, daß die Verbindung (86) zwischen der ersten (5) und der zweiten Arbeitskammer (6) über einen pneumatischen Raum (105) erfolgt, der über das Steuerventil (58) des Unterdruck-Bremskraftverstärkers (1) mit der zweiten Arbeitskammer (6) verbindbar ist.

18. Kraftfahrzeugbremsanlage nach Anspruch 17, dadurch **gekennzeichnet**, daß der pneumatische Raum (105) einerseits durch ein die zweite Arbeitskammer (6) nach außen hin begrenzendes Gehäuseteil (49) und andererseits durch einen an diesem Gehäuseteil (49) angebrachten Flansch (102) begrenzt ist.

19. Kraftfahrzeugbremsanlage nach Anspruch 18, bei der der Schließkörper des Steuerventils als Tellerventilkörper ausgebildet ist, dadurch **gekennzeichnet**, daß eine sich ins Innere des Steuerventilgehäuses (51) erstreckende Hülse (110) vorgesehen ist, die gegenüber dem Flansch (103) abgedichtet, an einem das Steuerventil (58) enthaltenden Steuerventilgehäuse (51) axial abgestützt ist und den Tellerventilkörper (112) hält.

20. Kraftfahrzeugbremsanlage nach Anspruch 19, dadurch **gekennzeichnet**, daß die Hülse (110) als Anlagefläche für eine das Eingangsglied (4) vorspannende Rückstellfeder (99) dient.

21. Kraftfahrzeugbremsanlage nach Anspruch 18 oder 19, dadurch **gekennzeichnet**, daß die Hülse (110) gegenüber dem Flansch (103) mittels eines Faltenbalges abgedichtet ist, dessen dem Flansch (103) abgewandter Dichtwulst zwischen dem Steuerventilgehäuse (51) und der Hülse (110) eingeklemmt ist.

22. Kraftfahrzeugbremsanlage nach Anspruch 19, dadurch **gekennzeichnet**, daß der Flansch (103) einen rohrförmigen axialen Fortsatz (104) aufweist, der das Steuerventilgehäuse (51) radial umgibt und in dem die Hülse (110) mit einem Führungsbund (111) geführt ist.

23. Kraftfahrzeugbremsanlage nach Anspruch 22, dadurch **gekennzeichnet**, daß der Führungsbund (111) mit einer Dichtmanschette (98) versehen ist.

24. Kraftfahrzeugbremsanlage nach Anspruch 23, dadurch **gekennzeichnet**, daß das Steuerventilgehäuse (51) mit Führungsrippen versehen ist, die radial an der Hülse (110) anliegen.

25. Kraftfahrzeugbremsanlage nach Anspruch 21, dadurch **gekennzeichnet**, daß die Hülse (110) mit, radialen Führungsrippen bzw. -laschen (113) versehen ist.

26. Kraftfahrzeugbremsanlage nach Anspruch 19, dadurch **gekennzeichnet**, daß das Steuerventilgehäuse (51) im Abstützungsbereich der Hülse (110) mit mehreren, an Umfang verteilten Ausschnitten (100) versehen ist.

27. Kraftfahrzeugbremsanlage nach Anspruch 16, dadurch **gekennzeichnet**, daß die zweite Ventilanordnung (83) durch ein elektromagnetisch betätigbares, stromlos offenes 2/2-Wegeventil (84) sowie ein elektromagnetisch betätigbares, stromlos geschlossenes 2/2-Wegeventil (85) gebildet ist.

28. Kraftfahrzeugbremsanlage nach Anspruch 16, dadurch **gekennzeichnet**, daß die zweite Ventilanordnung (83) durch ein elektromagnetisch betätigbares 4/2-Wegeventil (106) gebildet ist.

29. Kraftfahrzeugbremsanlage nach Anspruch 28, dadurch **gekennzeichnet**, daß die zweite Ventilanordnung (83) hauptzylinderseitig am Verstärkergehäuse (10 bzw. 48) angebracht ist.

30. Kraftfahrzeugbremsanlage nach Anspruch 16, dadurch **gekennzeichnet**, daß sowohl die zusätzliche Verbindung (86) der zweiten Arbeitskammer (6) mit der Atmosphäre als auch deren Verbindung mit der ersten Arbeitskammer (6) über pneumatische Kanäle (108,109) erfolgt, die sich innerhalb des Verstärkergehäuses (10) durch die bewegliche Wand (7) hindurch erstrecken.

31. Kraftfahrzeugbremsanlage nach einem der vorhergehenden Ansprüche, dadurch **gekennzeichnet**, daß die hydraulische Kammer (50) durch einen Ringraum (88) gebildet ist, der einerseits durch die Wandung einer in einem am hauptzylinderseitigen Gehäuseteil (48) angebrachten Zwischenstück (89) ausgebildeten Bohrung (90) und andererseits durch die Oberfläche des in die Bohrung (90) eingeschobenen Hauptbremszylinders (2) begrenzt ist, und in dem ein mit einem das Steuerventil (58) betätigenden Ventilkolben (54) verbundener, den Zwischenkolben (79) bildender Ringkolben (91) abgedichtet geführt ist.

32. Kraftfahrzeugbremsanlage nach Anspruch 31, dadurch **gekennzeichnet**, daß der Ringkolben (91) mittels einer Druckfeder (92) vorgespannt ist

**14**

und seine Bewegung gegenüber der beweglichen Wand (7) durch den Primärkolben (55) des Hauptbremszylinders (2) begrenzt ist.

33. Kraftfahrzeugbremsanlage nach Anspruch 31, dadurch **gekennzeichnet**, daß der Ringkolben (91) am Verstärkergehäuse (10) gefesselt ist.

34. Kraftfahrzeugbremsanlage nach einem der vorhergehenden Ansprüche, dadurch **gekennzeichnet**, daß Mittel (a,114,c,d,117,151) vorgesehen sind, die bei geschlossenem Rückhalteventil (46) eine begrenzte Bewegung des Eingangsglieds (4 bzw. 54) in Betätigungsrichtung ermöglichen.

35. Kraftfahrzeugbremsanlage nach Anspruch 34, dadurch **gekennzeichnet**, daß die bewegliche Wand (7) in kraftübertragenden Eingriff mit dem Zwischenkolben (79 bzw. 91) bringbar ist.

36. Kraftfahrzeugbremsanlage nach Anspruch 34, deren Eingangsglied mit dem als Ringkolben ausgebildeten, koaxial zum Eingangsglied bzw. zum Primärkolben angeordneten Zwischenkolben über ein Kraftübertragungselement im Eingriff steht, dadurch **gekennzeichnet**, daß zwischen dem Kraftübertragungselement (93) und dem Zwischenkolben (79 bzw. 91) ein axialer Abstand (a) vorgesehen ist.

37. Kraftfahrzeugbremsanlage nach Anspruch 36, dadurch **gekennzeichnet**, daß die bewegliche Wand (7) in einem Abstand (b) vom Zwischenkolben (79 bzw. 91) angeordnet ist, nach dessen Zurücklegen eine Übertragung der Verstärkungskraft auf den Zwischenkolben (79 bzw. 91) stattfindet.

38. Kraftfahrzeugbremsanlage nach Anspruch 36 in Verbindung mit Anspruch 37, dadurch **gekennzeichnet**, daß der axiale Abstand (a) größer als der Abstand (b) zwischen dem Zwischenkolben (79 bzw. 91) und der beweglichen Wand (7) ist.

39. Kraftfahrzeugbremsanlage nach Anspruch 36 in Verbindung mit Anspruch 37, dadurch **gekennzeichnet**, daß der axiale Abstand (a) kleiner als der Abstand (b) zwischen dem Zwischenkolben (79 bzw. 91) und der beweglichen Wand (7) ist.

40. Kraftfahrzeugbremsanlage nach Anspruch 36, dadurch **gekennzeichnet**, daß das Kraftübertragungselement (93) durch das Eingangsglied (4,54) sowie den Zwischenkolben (79 bzw. 91) senkrecht zu dessen Längsachse hindurchragt und daß der Zwischenkolben (79 bzw. 91) mit Schlitzen (114) versehen ist, die die Bewegung des Eingangsglieds (4,54) begrenzen und deren Länge dem axialen Abstand (a) entspricht.

41. Kraftfahrzeugbremsanlage nach einem der vorhergehenden Ansprüche, dadurch **gekennzeichnet**, daß der Zwischenkolben (79 bzw. 91) mit einem innerhalb der hydraulischen Kammer (50) angeordneten Anschlag (115) zusammenwirkt.

42. Kraftfahrzeugbremsanlage nach einem der vorhergehenden Ansprüche, dadurch **gekennzeichnet**, daß der Unterdruck-Bremskraftverstärker (1) in Tandembauweise ausgeführt ist.

43. Kraftfahrzeugbremsanlage nach einem der vorhergehenden Ansprüche, dadurch **gekennzeichnet**, daß das Steuerventilgehäuse (51) mit dem Eingangsglied (4,54) und der Hauptbremszylinder (2) zu einer baulichen Einheit (130) zusammengefaßt und örtlich vom Unterdruck-Bremskraftverstärker (1) getrennt angeordnet sind.

44. Kraftfahrzeugbremsanlage nach Anspruch 43 in Verbindung mit Anspruch 36, dadurch **gekennzeichnet**, daß das Kraftübertragungslement als ein durch den Primärkolben (55) hindurchragender zylindrischer Stift (93) ausgebildet ist und daß der Zwischenkolben (79 bzw. 91) eine axiale Nabe (150) aufweist, die den Stift (93) radial umgreift und mit einem Anschlagbund (151) versehen ist, dessen Entfernung vom Stift (93) dem axialen Abstand (a) entspricht.

45. Kraftfahrzeugbremsanlage nach Anspruch 43 oder 44, dadurch **gekennzeichnet**, daß das Steuerventilgehäuse (51) in kraftübertragenden Eingriff mit dem Zwischenkolben (79 bzw. 91) bringbar ist.

46. Kraftfahrzeugbremsanlage nach Anspruch 45, dadurch **gekennzeichnet**, daß das Steuerventilgehäuse (51) in einem Abstand (c) vom Zwischenkolben (79 bzw. 91) angeordnet ist, nach dessen Zurücklegen eine Übertragung der vom Unterdruck-Bremskraftverstärker (1) aufgebrachten Verstärkungskraft auf den Zwischenkolben (79 bzw. 91) stattfindet.

47. Kraftfahrzeugbremsanlage nach Anspruch 44 in Verbindung mit Anspruch 36, dadurch **gekennzeichnet**, daß der Abstand (a) zwischen dem Anschlagbund (151) und dem Stift (93) größer als der Abstand (c) zwischen dem Steuerventilgehäuse (51) und dem Zwischenkolben (79 bzw. 91) ist.

48. Kraftfahrzeugbremsanlage nach Anspruch 44 in Verbindung mit Anspruch 46, dadurch **gekenn-**

**zeichnet**, daß der Abstand (a) zwischen dem Anschlagbund (151) und dem Stift (93) kleiner als der Abstand (c) zwischen dem Steuerventilgehäuse (51) und dem Zwischenkolben (79 bzw. 91) ist.

49. Kraftfahrzeugbremsanlage nach einem der Ansprüche 43 bis 48, dadurch **gekennzeichnet**, daß das Eingangsglied (4) durch einen am Zwischenkolben (79 bzw. 91) vorgesehenen Anschlag (152) positioniert ist.

50. Kraftfahrzeugbremsanlage nach Anspruch 49, dadurch **gekennzeichnet**, daß der Anschlag durch einen in der Nabe (150) angeordneten Sicherungsring (152) gebildet ist, an dem der Stift (93) axial anliegt.

51. Kraftfahrzeugbremsanlage nach einem der vorhergehenden Ansprüche, bei der eine zweite Verbindung zwischen der hydraulischen Kammer und dem Druckmittelvorratsbehälter vorgesehen ist, dadurch **gekennzeichnet**, daß die zweite Verbindung (116) durch eine Bewegung des Zwischenkolbens (79 bzw. 91) in Betätigungsrichtung absperrbar ist.

52. Kraftfahrzeugbremsanlage nach Anspruch 51, dadurch **gekennzeichnet**, daß die zweite Verbindung (116) durch eine in der hydraulischen Kammer (50) mündende Öffnung (Schnüffelloch (117)) gebildet ist, die mit einem am Zwischenkolben (79 bzw. 91) angeordneten Dichtelement (118) zusammenwirkt.

53. Kraftfahrzeugbremsanlage nach Anspruch 52, dadurch **gekennzeichnet**, daß die Öffnung (117) in Ruhestellung in einem Abstand (d) vom Dichtelement (118) angeordnet ist.

54. Kraftfahrzeugbremsanlage nach Anspruch 52 oder 53, dadurch **gekennzeichnet**, daß die Öffnung (117) als Drosselbohrung ausgebildet ist.

55. Kraftfahrzeugbremsanlage nach Anspruch 8, dadurch **gekennzeichnet**, daß die Reaktionseinrichtung ein Kraftübertragungselement aufweist, das in axialem Abstand (z) vom Eingangsglied (Innenkolben (57)) angeordnet ist und bei Erreichen eines vorgegebenen Druckes im Primärdruckraum (81) eine gegen die Kraft einer am Verstärkungskraftabgabeglied (Außenkolben (56)) abgestützten Druckfeder (158) gerichtete Kraftkomponente am Eingangsglied (Innenkolben (57)) wirksam werden läßt.

56. Kraftfahrzeugbremsanlage nach Anspruch 55, dadurch **gekennzeichnet**, daß das Kraftübertragungsglied (156) im Außenkolben (56) abgedichtet geführt ist und daß die Druckfeder (158,160) sich an einer am Außenkolben (56) ausgebildeten Ringfläche (159) abstützt.

57. Kraftfahrzeugbremsanlage nach Anspruch 56, dadurch **gekennzeichnet**, daß die Druckfeder als eine zylindrische Spiralfeder (158) ausgebildet ist.

58. Kraftfahrzeugbremsanlage nach Anspruch 56, dadurch **gekennzeichnet**, daß die Druckfeder als eine Tellerfeder ausgebildet ist.

59. Kraftfahrzeugbremsanlage nach Anspruch 56, dadurch **gekennzeichnet**, daß die Druckfeder als eine Gummifeder (160) ausgebildet ist, deren Kontur in der Anfangsphase der Betätigung lediglich eine Teilanlage des Innenkolbens (57) gestattet.

60. Kraftfahrzeugbremsanlage nach Anspruch 59, dadurch **gekennzeichnet**, daß das Ende des Innenkolbens (57) kalottenförmig ausgebildet ist und mit einer konischen Ausnehmung (161) der Gummifeder (160) zusammenwirkt.

61. Kraftfahrzeugbremsanlage nach Anspruch 59, dadurch **gekennzeichnet**, daß das Ende des Innenkolbens (57) als ein Regelstumpf ausgebildet ist, dessen Kegelwinkel größer ist als der Kegelwinkel der in der Gummifeder (160) ausgebildeten konischen Ausnehmung (161).

62. Kraftfahrzeugbremsanlage nach Anspruch 59, dadurch **gekennzeichnet**, daß das Kraftübertragungsglied (156) mit einem auf den Innenkolben (57) zu gerichteten, die Gummifeder (160) durchdringenden axialen Fortsatz (162) versehen ist, dessen Länge der Länge der Gummifeder (160) abzüglich der Tiefe der konischen Ausnehmung (161) entspricht.

**Claims**

1. An automotive vehicle brake unit with anti-locking device, with a vacuum brake power booster (1) arranged between the brake pedal (3) and the master brake cylinder (2) as to its action with at least two power chambers (5, 6) divided from each other by a movable wall (7), the first (5) of which being connectible to a vacuum source (18) and the second one being aeratable through a control valve (58) actuatable by means of an input member (4) coupled to the brake pedal (3), in order to generate a boosting power being proportional to the power of the brake pedal, said first power chamber (5) in the event of a slip control action being aeratable by means of a first valve arrangement (39) and wheel brake cylinders (20 to 23) being connected to a primary (81) and to a secondary (82) pressure chamber of the master brake cylinder (2) through brake lines (12, 13), with sensors (25 to 28) which are associated with the wheels to be braked and which monitor the rotating behaviour of the wheels in order to detect any locking and whose output signals (29 to 32) are conveyable to a central electronic control unit (33) by means of the control signals (34 to 37) of which electromagnetically actuatable hydraulic fluid inlet and outlet valves (14 to 17) are controllable which are inserted in the brake lines (12, 13) for slip control, **characterized** in that the said movable wall (7) of the said vacuum brake power booster (1) is movable independently of the said input member (4), and in that a hydraulic chamber (50) being in active connection with the said input member (4) is provided whose link (90) with a pressureless hydraulic fluid reservoir (11) allows to be shut off (46, 46′).

2. An automotive vehicle brake unit as claimed in claim 1, **characterized** in that the said hydraulic chamber (50) is configured in a cylindrical section (78) closing an axial extension (52) of the said master brake cylinder (2) which projects into the said first power chamber (5) of the said vacuum brake power booster (1).

3. An automotive vehicle brake unit as claimed in claim 1, **characterized** in that the said link (90) of the said hydraulic chamber (50) to the said hydraulic fluid reservoir (11) allows to be shut off by means of at least one retaining valve (46).

4. An automotive vehicle brake unit as claimed in claim 3, **characterized** in that the said retaining valve (46) is configured in the shape of a solenoid valve, open when de-energized which is energizable by output signals of the said central electronic control unit (33).

5. An automotive vehicle brake unit as claimed in claims 1 to 4, **characterized** in that in the said chamber (50) an intermediate piston (79) is slidingly guided which interacts with the said input member (4), on one side, and with a primary piston (55) of the said master brake cylinder (2), on the other side.

6. An automotive vehicle brake unit as claimed in anyone of the preceding claims, **characterized** in that the said primary piston (55) is formed by an external piston (56) which is axially guided in the longitudinal bore (60) of the said master brake cylinder (2) and is in connection with the said movable wall (7), and by an internal piston (57) which is guided therein.

7. An automotive vehicle brake unit as claimed in claim 6, **characterized** in that the said internal piston (57) is configured in the shape of a plunger piston at the end of the said intermediate piston (79) facing the said master brake cylinder (2).

8. An automotive vehicle brake unit as claimed in anyone of claims 1 to 6, **characterized** in that in the said primary pressure chamber (81) a reaction device (59) is arranged which in the event of a failure of the brake circuit (12) connected to it renders possible a pressure build-up in the secondary pressure chamber (82) in accordance with a characteristic curve fixed previously and proportional to the input power.

9. An automotive vehicle brake unit as claimed in claim 8, **characterized** in that the said reaction device (59) is formed by one each annular surface (62, 63) being configured at the said external piston (56), respectively at the said internal piston (57) and interacting with an annular elastic reaction element (64) which is preferably arranged at the said secondary piston (65).

10. An automotive vehicle brake unit as claimed in claim 8, **characterized** in that the said reaction device (59) is formed by an elastic reaction disc (67) being arranged within a cylindrical body (66) and being in active connection with the said external piston (56) through the said cylindrical body (66) and with the said internal piston (57) directly and against whose side facing away from the said primary piston (55) a pressure plate (61) is abutted at which a part of an opening mechanism (68) of a first central valve (69) takes support.

11. An automotive vehicle brake unit as claimed in anyone of the preceding claims, **characterized** in that the intermediate piston (79) is furnished with an axial bore (80) being in connection with the said hydraulic chamber (50) at the end of which said axial bore (80) facing the said primary piston (55) an actuating piston (70) is provided which actuates a stopping apparatus (71) which limits the relative motion of the said external piston (56) with respect to the said internal piston (57).

12. An automotive vehicle brake unit as claimed in claim 11, **characterized** in that the said stopping apparatus (71) is constituted by at least two sprung segments (72, 73) arranged symmetrically opposite each other and being movable in radial direction interacting with slopes (74, 75) which are configured at the said actuating piston (70).

13. An automotive vehicle brake unit as claimed in claim 1, **characterized** in that the said link (90) of the said hydraulic chamber (50) allows to be shut off by means of two said retaining valves (46, 46') being connected in parallel, the individual parallel branches of the said link (90) being each one connected to a hydraulic fluid chamber (93, 94) the variation of the filling level of which is measurable by one each measuring apparatus (91, 92) whose output signals are compared to each other, in case of detection of a divergence a differential signal being generated which activates a warning device.

14. An automotive vehicle brake unit as claimed in claim 13, **characterized** in that the said hydraulic fluid chambers (93, 94) are provided within the said hydraulic fluid reservoir (11).

15. An automotive vehicle brake unit as claimed in claim 13 or in claim 14, **characterized** in that the said measuring apparatus (91, respectively 92) is constituted by a float (95) which bears a ferromagnetic core (96) interacting with a coil (97).

16. An automotive vehicle brake unit as claimed in anyone of the preceding claims, **characterized** in that a second valve arrangement (83) is provided which renders possible an additional link independent of the said input member (4) between the said second power chamber (6) and the atmosphere, simultaneously shutting off the link (86) between the said first power chamber (5) and the said second power chamber (6).

17. An automotive vehcile brake unit as claimed in claim 16, **characterized** in that the said link (86) between the said first (5) and the said second power chamber (6) is realized through a pneumatic chamber (105) which is connectible to the said second power chamber (6) through the control valve (58) of the vacuum brake power booster (1).

18. An automotive vehicle brake unit as claimed in claim 17, **characterized** in that the said pneumatic chamber (105) is defined, on one side, by a housing part (49) delimiting the said second power chamber (6) toward the outside and, on the other side, by a flange (102) secured to that said housing part (49).

19. An automotive vehicle brake unit as claimed in claim 18, in which the closing element of the said control valve is configured in the shape of a poppet valve body, **characterized** in that a bushing (110) extending into the interior of the control valve housing (51) is provided which is sealed off in respect of the said flange (103), is supported in axial direction at a said control valve housing (51) containing the said control valve (58) and retains the said poppet valve body (112).

20. An automotive vehicle brake unit as claimed in claim 19, **characterized** in that the said bushing (110) serves as an abutment surface for a return spring (99) prestressing the said input member (4).

21. An automotive vehicle brake unit as claimed in claim 18 or in claim 19, **characterized** in that the said bushing (110) is sealed off in respect of the said flange (103) by means of a boot whose sealing bead facing away from the said flange (103) is clamped between the said control valve housing (51) and the said bushing (110).

22. An automotive vehicle brake unit as claimed in claim 19, **characterized** in that the said flange (103) is furnished with a tubular axial extension (104) which surrounds the said control valve housing (51) in radial direction and within which the said bushing (110) is guided with a guide collar (111).

23. An automotive vehicle brake unit as claimed in claim 22, **characterized** in that the said guide collar (111) is furnished with a sealing cup (98).

24. An automotive vehicle brake unit as claimed in claim 23, **characterized** in that the said control valve housing (51) is furnished with guide ribs which are abutted against the said bushing (110) in radial direction.

25. An automotive vehicle brake unit as claimed in claim 21, **characterized** in that the said bushing (110) is furnished with radial guide ribs or guide tongues (113).

26. An automotive vehicle brake unit as claimed in claim 19, **characterized** in that the said control valve housing (51) is furnished with a plurality of openings (100) in the supporting range of the said bushing (110) which are distributed over its circumference.

27. An automotive vehicle brake unit as claimed in claim 16, **characterized** in that the said second valve arrangement (83) is constituted by an electromagnetically actuatable 2/2-way valve (84), open in the de-energized state and by an electromagnetically actuatable 2/2-way valve (85), closed in the de-energized state.

28. An automotive vehicle brake unit as claimed in claim 16, **characterized** in that the said second valve arrangement (83) is constituted by an electromagnetically actuatable 4/2-way valve (106).

29. An automotive vehicle brake unit as claimed in claim 28, **characterized** in that the said second valve arrangement (83) is secured to the booster housing (10, respectively 48) on the side of the said master cylinder.

30. An automotive vehicle brake unit as claimed in claim 16, **characterized** in that both the said additional link (86) of the said second power chamber (6) with the atmosphere and its link with the said first power chamber (6) is realized through pneumatic ducts (108, 109) which extend within the said booster housing (10) through the said movable wall (7).

31. An automotive vehicle brake unit as claimed in anyone of the preceding claims, **characterized** in that the said hydraulic chamber (50) is formed by an annular chamber (88) which is defined, on one side, by the wall of a bore (90) being configured in an intermediate element (89) which is disposed at the said master cylinder-side housing part (48) and, on the other side, by the surface of the said master brake cylinder (2) which is slid into the said bore (90), and within which an annular piston (91) is sealedly guided which is connected to a valve piston (54) actuating the said control valve (58) and which forms the said intermediate piston (79).

32. An automotive vehicle brake unit as claimed in claim 31, **characterized** in that the said annular piston (91) is prestressed by means of a compression spring (92) and its motion relative to the said movable wall (7) is limited by the said primary piston (55) of the said master brake cylinder (2).

33. An automotive vehicle brake unit as claimed in claim 31, **characterized** in that the said annular piston (91) is captivated at the said booster housing (10).

34. An automotive vehicle brake unit as claimed in anyone of the preceding claims, **characterized** in that means (a, 114, c, d, 117, 151) are provided which render possible a limited motion of the said input member (4, respectively 54) in the direction of actuation when the said retaining valve (46) is closed.

35. An automotive vehicle brake unit as claimed in claim 34, **characterized** in that the said movable wall (7) allows to be brought into power-transmitting engagement with the said intermediate piston (79, respectively 91).

36. An automotive vehicle brake unit as claimed in claim 34, whose input member is in engagement with the intermediate piston configured in the shape of an annular piston and arranged coaxially with the input member, respectively with the primary piston through a power transmitting element, **characterized** in that an axial distance (a) is provided between the said power transmitting element (93) and the said intermediate piston (79, respectively 91).

37. An automotive vehicle brake unit as claimed in claim 36, **characterized** in that the said movable wall (7) is arranged at a distance (b) from the said intermediate piston (79, respectively 91), upon overcoming of which a transmission of the boosting power to the said intermediate piston (79, respectively 91) takes place.

38. An automotive vehicle brake unit as claimed in claim 36 in conjunction with claim 37, **characterized** in that the said axial distance (a) is larger than the said distance (b) between the said intermediate piston (79, respectively 91) and the said movable wall (7).

39. An automotive vehicle brake unit as claimed in claim 36 in conjunction with claim 37, **characterized** in that the said axial distance (a) is smaller than the said distance (b) between the said intermediate piston (79, respectively 91) and the said movable wall (7).

40. An automotive vehicle brake unit as claimed in claim 36, **characterized** in that the said power transmitting element (93) projects through the said input member (4, 54) as well as through the said intermediate piston (79, respectively 91) normally to its longitudinal axis and in that the said intermediate piston (79, respectively 91) is furnished with slots (114) which limit the motion of the said input member (4, 54) and whose length corresponds to the said axial distance (a).

41. An automotive vehicle brake unit as claimed in anyone of the preceding claims, **characterized** in that the said intermediate piston (79, respectively 91) interacts with a stop (115) being arranged within the said hydraulic chamber (50).

**42.** An automotive vehicle brake unit as claimed in anyone of the preceding claims, **characterized** in that the said vacuum brake power booster (1) is designed tandem-type.

**43.** An automotive vehicle brake unit as claimed in anyone of the preceding claims, **characterized** in that the said control valve housing (51) is combined with the said input member (4, 54) and the said master brake cylinder (2) to form a constructional unit (130) and is arranged separately from the said vacuum brake power booster (1).

**44.** An automotive vehicle brake unit as claimed in claim 43 in conjunction with claim 36, **characterized** in that the said power transmitting element is configured in the shape of a cylindrical pin (93) projecting through the said primary piston (55) and in that the said intermediate piston (79, respectively 91) is furnished with an axial hub (150) which surrounds the said pin (93) radially and which is provided with a stop collar (151) whose distance from the said pin (93) corresponds to the said axial distance (a).

**45.** An automotive vehicle brake unit as claimed in claim 43 or in claim 44, **characterized** in that the said control valve housing (51) allows to be brought into power-transmitting engagement with the said intermediate piston (79, respectively 91).

**46.** An automotive vehicle brake unit as claimed in claim 45, **characterized** in that the said control valve housing (51) is arranged at a distance (c) from the said intermediate piston (79, respectively 91), upon overcoming of which a transmission of the boosting power enacted by the said vacuum brake power booster (1) to the said intermediate piston (79, respectively 91) takes place.

**47.** An automotive vehicle brake unit as claimed in claim 44 in conjunction with claim 36, **characterized** in that the said distance (a) between the said stop collar (151) and the said pin (93) is larger than the distance (c) between the said control valve housing (51) and the said intermediate piston (79, respectively 91).

**48.** An automotive vehicle brake unit as claimed in claim 44 in conjunction with claim 46, **characterized** in that the said distance (a) between the said stop collar (151) and the said pin (93) is smaller than the said distance (c) between the said control valve housing (51) and the said intermediate piston (79, respectively 91).

**49.** An automotive vehicle brake unit as claimed in anyone of claims 43 to 48, **characterized** in that the said input member (4) is positioned by a stop (152) which is provided at the said intermediate piston (79, respectively 91).

**50.** An automotive vehicle brake unit as claimed in claim 49, **characterized** in that the said stop is formed by a circlip (152) which is arranged in the said hub (150), against which circlip (152) the said pin (93) is abutted in axial direction.

**51.** An automotive vehicle brake unit as claimed in anyone of the preceding claims, in which a second link is provided between the hydraulic chamber and the hydraulic fluid reservoir, **characterized** in that the said second link (116) allows to be shut off by a motion of the said intermediate piston (79, respectively 91) in the direction of actuation.

**52.** An automotive vehicle brake unit as claimed in claim 51, **characterized** in that the said second link (116) is formed by an opening (breather hole (117))which ends up in the said hydraulic chamber (50) and interacts with a sealing element (118) arranged at the said intermediate piston (79, respectively 91).

**53.** An automotive vehicle brake unit as claimed in claim 52, **characterized** in that in the position of rest the said opening (117) is arranged at a distance (d) from the said sealing element (118).

**54.** An automotive vehicle brake unit as claimed in claim 52 or in claim 53, **characterized** in that the said opening (117) is configured in the shape of a restriction hole.

**55.** An automotive vehicle brake unit as claimed in claim 8, **characterized** in that the said reaction device is furnished with a power transmitting element which is arranged at an axial distance (z) from the said input member (internal piston (57)) and which in the event of a predetermined pressure being reached in the said primary pressure chamber (81) lets become effective a force component at the said input member (internal piston (57)) directed against the power of a compression spring (158) taking support at the said boosting power output member (exernal piston (56)).

**56.** An automotive vehicle brake unit as claimed in claim 55, **characterized** in that the said power transmitting element (156) is sealedly guided within the said external piston (56) and in that the said compression spring (158, 160) takes support at an annular surface (159) being configured at the said external piston (56).

**57.** An automotive vehicle brake unit as claimed in claim 56, **characterized** in that the said compression spring is configured in the shape of a cylindrical spiral spring (158).

**58.** An automotive vehicle brake unit as claimed in claim 56, **characterized** in that the said compression spring is configured in the shape of a cup spring.

**59.** An automotive vehicle brake unit as claimed in claim 56, **characterized** in that the said compression spring is configured in the shape of a rubber spring (160) whose contour allows only a partial abutment of the said internal piston (57) in the initial phase of actuation.

**60.** An automotive vehicle brake unit as claimed in claim 59, **characterized** in that the end of the said internal piston (57) has a calotte-shaped configuration and interacts with a conical recess (161) of the said rubber spring (160).

**61.** An automotive vehicle brake unit as claimed in claim 59, **characterized** in that the end of the said internal piston (57) is configured in the shape of a truncated cone whose cone angle is larger than the cone angle of the said conical recess (161) being configured in the said rubber spring (160).

**62.** An automotive vehicle brake unit as claimed in claim 59, **characterized** in that the said power transmitting element (156) is furnished with an axial extension (162) directed toward the said internal piston (57) and penetrating the said rubber spring (160),whose length corresponds to the length of the said rubber spring (160) less the depth of the said conical recess (161).

**Revendications**

**1.** Système de freinage antiblocage pour véhicule automobile, comprenant, d'une part, un amplificateur d'effort de freinage à dépression (1) disposé de façon à agir entre la pédale de frein (3) et le maître-cylindre de frein (2) et comportant au moins deux chambres de travail (5, 6) séparées l'une de l'autre par une paroi mobile (7), la première (5) étant agencée de façon à pouvoir être reliée à une source de dépression (18) et la seconde étant agencée de façon à pouvoir être mise à l'atmosphère par l'intermédiaire d'une valve de commande (58) agencée de façon à pouvoir être actionnée au moyen d'un organe d'entrée (4) accouplé à la pédale de frein (3), afin de produire une force d'amplification proportionnelle à l'effort exercé sur la pédale de frein, tandis que la première chambre de travail (5) est agencée de façon à pouvoir être mise à l'atmosphère au moyen d'un premier agencement de valve (39) dans un cas de régulation du glissement et que des cylindres de freins de roues (20-23) sont raccordés à une chambre primaire de pression (81) et une chambre secondaire de pression (82) du maître-cylindre de frein (2) par l'intermédiaire de conduites de frein (12, 13), et, d'autre, part, des capteurs (25-28), associés aux roues à freiner, qui relèvent le comportement des roues en rotation afin de déterminer l'existence d'un blocage et dont des signaux de sortie (29-32) peuvent être envoyés à un circuit électronique central de régulation (33) dont des signaux de commande (34-37) peuvent commander des valves d'entrée d'agent de pression et des valves de sortie d'agent de pression (14-17) à actionnement électromagnétique et insérés dans les conduites de frein (12, 13) en vue de la régulation du glissement, caractérisé en ce que la paroi mobile (7) de l'amplificateur d'effort de freinage à dépression (1) est agencée de façon à pouvoir être déplacée indépendamment de l'organe d'entrée (4) et en ce qu'il est prévu une chambre hydraulique (50) qui communique avec l'organe d'entrée (4) de façon à pouvoir coopérer avec celui-ci et dont une liaison (90) avec un réservoir de stockage d'agent de pression (11) sans pression est agencée de façon à pouvoir être bloquée (46, 46').

**2.** Système de freinage pour véhicule automobile suivant la revendication 1, caractérisé en ce que la chambre hydraulique (50) est ménagée dans une pièce cylindrique (78) obturant un prolongement axial (52) du maître-cylindre de frein (2) qui fait saillie dans la première chambre de travail (5) de l'amplificateur d'effort de freinage à dépression (1).

**3.** Système de freinage pour véhicule automobile suivant la revendication 1, caractérisé en ce que la liaison (90) de la chambre hydraulique (50) avec le réservoir de stockage d'agent de pression (11) est agencée de façon à pouvoir être bloquée au moyen d'au moins une valve antiretour (46).

**4.** Système de freinage pour véhicule automobile suivant la revendication 3, caractérisé en ce que la valve antiretour (46) est réalisée sous la forme d'une valve électromagnétique ouverte en l'absence de courant qui est agencée de façon à pouvoir être mise sous tension par des signaux de sortie du circuit électronique central de régulation (33).

**5.** Système de freinage pour véhicule automobile suivant l'une des revendications 1 à 4, caractérisé en ce qu'un piston intermédiaire (79), qui coopère d'une part avec l'organe d'entrée (4) et d'autre part avec un piston principal (55) du maître-cylindre de frein (2), est guidé de façon à pouvoir se déplacer en translation dans la chambre (50).

6. Système de freinage pour véhicule automobile suivant l'une des revendications précédentes, caractérisé en ce que le piston principal (55) est constitué d'un piston extérieur (56), guidé axialement dans l'alésage longitudinal (60) du maître-cylindre de frein (2) et se trouvant en liaison avec la paroi mobile (7), ainsi que d'un piston intérieur (57) guidé dans ce piston extérieur (56).

7. Système de freinage pour véhicule automobile suivant la revendication 6, caractérisé en ce que le piston intérieur (57) est réalisé sous la forme d'un piston plongeur disposé à l'extrémité du piston intermédiaire (79) qui est tournée vers le maître-cylindre de frein (2).

8. Système de freinage pour véhicule automobile suivant l'une des revendications 1 à 6, caractérisé en ce que, dans la chambre principale de pression (81), il est disposé un dispositif de réaction (59) qui, en cas de défaillance du circuit de frein (12) raccordé à cette chambre, permet, dans la chambre secondaire de pression (82), une augmentation de pression qui est proportionnelle à la force d'entrée et qui suit une caractéristique fixée au préalable.

9. Système de freinage pour véhicule automobile suivant la revendication 8, caractérisé en ce que le dispositif de réaction (59) est constitué par des surfaces annulaires (62, 63) qui sont réalisées respectivement sur le piston extérieur (56) et sur le piston intérieur (57) et qui coopèrent avec un corps annulaire élastique de réaction (64) disposé de préférence sur le piston secondaire (65).

10. Système de freinage pour véhicule automobile suivant la revendication 8, caractérisé en ce que le dispositif de réaction (59) est constitué d'un disque élastique de réaction (67) qui est disposé dans un corps cylindrique (66) et qui est en liaison de coopération avec le piston extérieur (56) par l'intermédiaire du corps cylindrique (66) et directement avec le piston intérieur (57), tandis qu'une plaque de pression (61), sur laquelle s'appuie une partie d'un mécanisme d'ouverture (68) d'une première valve centrale (69), est appliquée sur la face de ce disque de réaction (67) qui est située à l'opposé du piston principal (55).

11. Système de freinage pour véhicule automobile suivant l'une des revendications précédentes, caractérisé en ce que le piston intermédiaire (79) est pourvu d'un alésage axial (80) communiquant avec la chambre hydraulique (50), tandis qu'à l'extrémité de cet alésage axial (80) qui est tournée vers le piston principal (55), il est prévu un piston d'actionnement (70) qui actionne un dispositif d'arrêt (71) qui limite le déplacement relatif du piston extérieur et du piston intérieur (56, 57) l'un vis-à-vis de l'autre.

12. Système de freinage pour véhicule automobile suivant la revendication 11, caractérisé en ce que le dispositif d'arrêt (71) est constitué d'au moins deux segments (72, 73), soumis à un effort élastique, qui sont disposés d'une manière symétrique l'un en face de l'autre et qui sont agencés de façon à pouvoir se déplacer radialement, en coopérant avec des surfaces inclinées (74, 75) prévues sur le piston d'actionnement (70).

13. Système de freinage pour véhicule automobile suivant la revendication 1, caractérisé en ce que la liaison (90) de la chambre hydraulique (50) est agencée de façon à pouvoir être bloquée au moyen de deux valves antiretour (46, 46') montées en parallèle, les différentes branches parallèles de la liaison (90) étant raccordées respectivement à des chambres d'agent de pression (93, 94) dont les variations d'état de remplissage peuvent être mesurées, pour chacune, par un dispositif de mesure (91, 92), les signaux de sortie des dispositifs de mesure (91, 92) étant comparés l'un à l'autre, tandis que, lorsqu'un écart est relevé, il se forme un signal de différence qui actionne un dispositif d'avertissement.

14. Système de freinage pour véhicule automobile suivant la revendication 13, caractérisé en ce que les chambres d'agent de pression (93, 94) sont prévues à l'intérieur du réservoir de stockage d'agent de pression (11).

15. Système de freinage pour véhicule automobile suivant la revendication 13 ou 14, caractérisé en ce que le dispositif de mesure (91, 92) est constitué d'un flotteur (95) qui porte un noyau ferromagnétique (96) coopérant avec une bobine (97).

16. Système de freinage pour véhicule automobile suivant l'une des revendications précédentes, caractérisé en ce qu'il est prévu un second agencement de valve (83) qui permet une liaison supplémentaire, indépendante de l'organe d'entrée (4), de la seconde chambre de travail (6) avec l'atmosphère, tout en bloquant simultanément la liaison (86) de la première chambre de travail (5) et de la seconde chambre de travail (6).

**17.** Système de freinage pour véhicule automobile suivant la revendication 16, caractérisé en ce que la liaison (86) entre la première chambre de travail (5) et la seconde chambre de travail (6) s'effectue par l'intermédiaire d'une chambre pneumatique (105) qui est agencée de façon à pouvoir être reliée à la seconde chambre de travail (6) par l'intermédiaire de la valve de commande (58) de l'amplificateur d'effort de freinage à dépression (1).

**18.** Système de freinage pour véhicule automobile suivant la revendication 17, caractérisé en ce que la chambre pneumatique (105) est délimitée, d'une part, par une partie de boîtier (49) délimitant vers l'extérieur la seconde chambre de travail (6) et, d'autre, par une bride (103) montée sur cette partie de boîtier (49).

**19.** Système de freinage pour véhicule automobile suivant la revendication 18, dans lequel le corps de fermeture de la valve de commande est réalisé sous la forme d'un corps de valve en champignon, caractérisé en ce qu'il est prévu un fourreau (110) qui s'étend à l'intérieur du boîtier (51) de la valve de commande et qui prend appui axialement, en étant étanchéifié vis-à-vis de la bride (103), sur un boîtier de valve de commande (51) contenant la valve de commande (58) et qui sert à maintenir le corps de valve en champignon (112).

**20.** Système de freinage pour véhicule automobile suivant la revendication 19, caractérisé en ce que le fourreau (110) sert de surface d'appui pour un ressort de rappel (99) mettant sous précontrainte l'organe d'entrée (4).

**21.** Système de freinage pour véhicule automobile suivant la revendication 18 ou 19, caractérisé en ce que le fourreau (110) est étanchéifié vis-à-vis de la bride (103) au moyen d'un soufflet dont le bourrelet d'étanchéité situé à l'opposé de la bride (103) est serré entre le boîtier de commande de valve (51) et le fourreau (110).

**22.** Système de freinage pour véhicule automobile suivant la revendication 19, caractérisé en ce que la bride (103) comporte un prolongement axial tubulaire (104) qui entoure le boîtier de valve de commande (51) et dans lequel le fourreau (110) est guidé au moyen d'une collerette de guidage (111).

**23.** Système de freinage pour véhicule automobile suivant la revendication 22, caractérisé en ce que la collerette de guidage (111) est pourvue d'une coupelle d'étanchéité (98).

**24.** Système de freinage pour véhicule automobile suivant la revendication 23, caractérisé en ce que le boîtier de valve de commande (51) est pourvu de nervures de guidage qui s'appuient radialement sur le fourreau (110).

**25.** Système de freinage pour véhicule automobile suivant la revendication 21, caractérisé en ce que le fourreau (110) est pourvu de nervures ou de pattes radiales de guidage (113).

**26.** Système de freinage pour véhicule automobile suivant la revendication 19, caractérisé en ce que, dans la zone d'appui du fourreau (110), le boîtier de valve de commande (51) est pourvu de plusieurs découpes (100) réparties sur son pourtour.

**27.** Système de freinage pour véhicule automobile suivant la revendication 16, caractérisé en ce que le second agencement de valve (83) est constitué d'une valve à 2 voies/2 positions (84) à actionnement électromagnétique et ouverte en l'absence de courant, ainsi que d'une valve à 2 voies/2 positions (85) à actionnement électromagnétique et fermée en l'absence de courant.

**28.** Système de freinage pour véhicule automobile suivant la revendication 16, caractérisé en ce que le second agencement de valve (83) est constitué par une valve à 4 voies/2 positions (106) à actionnement électromagnétique.

**29.** Système de freinage pour véhicule automobile suivant la revendication 28, caractérisé en ce que le second agencement de valve (83) est monté sur le boîtier d'amplificateur (10, 48) du côté du maître-cylindre.

**30.** Système de freinage pour véhicule automobile suivant la revendication 16, caractérisé en ce qu'aussi bien la liaison supplémentaire (86) de la seconde chambre de travail (6) avec l'atmosphère que sa liaison avec la première chambre de travail (6) s'effectuent par l'intermédiaire de conduits pneumatiques (108, 109) qui s'étendent à l'intérieur du boîtier d'amplificateur (10) en traversant la paroi mobile (7).

**31.** Système de freinage pour véhicule automobile suivant l'une des revendications précédentes, caractérisé en ce que la chambre hydraulique (50) est constituée par une chambre annulaire (88) qui est délimitée, d'une part, par la paroi d'un alésage (90) réalisé dans une pièce intermédiaire (89) montée sur la partie de boîtier (88) située du côté du maître-cylindre et, d'autre part, par la surface du maître-cylindre de frein (2) qui est engagé dans cet alésage (90), tandis qu'un piston annulaire (91), constituant le piston intermédiaire (79) et relié à un piston de valve (54) actionné par la valve de commande (58), est guidé d'une manière étanche dans cette chambre annulaire (88).

32. Système de freinage pour véhicule automobile suivant la revendication 31, caractérisé en ce que le piston annulaire (91) est soumis à une précontrainte au moyen d'un ressort de compression( 92) et en ce que son déplacement vis-à-vis de la paroi mobile (7) est limité par le piston principal (55) du maître-cylindre de frein (2).

33. Système de freinage pour véhicule automobile suivant la revendication 31, caractérisé en ce que le piston annulaire (91) est retenu sur le boîtier d'amplificateur (10).

34. Système de freinage pour véhicule automobile suivant l'une des revendications précédentes, caractérisé en ce qu'il est prévu des moyens (a, 114, c, d, 117, 151) qui, lorsque la valve antiretour (46) est fermée, permettent un déplacement limité de l'organe d'entrée (4, 54) suivant la direction d'actionnement.

35. Système de freinage pour véhicule automobile suivant la revendication 34, caractérisé en ce que la paroi mobile (7) est agencée de façon à pouvoir être amenée en coopération avec le piston intermédiaire (79, 91) de façon à permettre une transmission des forces.

36. Système de freinage pour véhicule automobile suivant la revendication 34, dont l'organe d'entrée coopère, par l'intermédiaire d'un élément de transmission des forces, avec le piston intermédiaire réalisé sous la forme d'un piston annulaire et disposé suivant le même axe que l'organe d'entrée ou le piston principal, caractérisé en ce qu'il est prévu une distance axiale (a) entre l'élément de transmission des forces (93) et le piston intermédiaire (79, 91).

37. Système de freinage pour véhicule automobile suivant la revendication 36, caractérisé en ce que la paroi mobile (7) est disposée à une distance (b) du piston intermédiaire (79, 91), une transmission de la force d'amplification sur le piston intermédiaire (79, 91) ayant lieu après que cette distance (b) ait été parcourue.

38. Système de freinage pour véhicule automobile suivant la revendication 37 lorsqu'elle dépend de la revendication 36, caractérisé en ce que la distance axiale (a) est supérieure à la distance (b) entre le piston intermédiaire (79, 91) et la paroi mobile (7).

39. Système de freinage pour véhicule automobile suivant la revendication 37 lorsqu'elle dépend de la revendication 36, caractérisé en ce que la distance axiale (a) est inférieure à la distance (b) entre le piston intermédiaire (79, 91) et la paroi mobile (7).

40. Système de freinage pour véhicule automobile suivant la revendication 36, caractérisé en ce que l'élément de transmission de force (93) traverse l'organe d'entrée (54) et le piston intermédiaire (79, 91) perpendiculairement à leur axe longitudinal et en ce que le piston intermédiaire (79, 91) est pourvu de fentes (114) qui limitent le déplacement de l'organe (4, 54) et dont la longueur correspond à la distance axiale (a).

41. Système de freinage pour véhicule automobile suivant l'une des revendications précédentes, caractérisé en ce que le piston intermédiaire (79, 91) coopère avec une butée (115) disposée à l'intérieur de la chambre hydraulique (50).

42. Système de freinage pour véhicule automobile suivant l'une des revendications précédentes, caractérisé en ce que l'amplificateur d'effort de freinage à dépression (1) présente un agencement en tandem.

43. Système de freinage pour véhicule automobile suivant l'une des revendications précédentes, caractérisé en ce que le boîtier de valve de commande (51) est réuni à l'organe d'entrée (4, 54) et au maître-cylindre de frein (2) de façon à constituer une unité structurelle (130) et est disposé de manière à être séparé dans l'espace de l'amplificateur d'effort de freinage à dépression (1).

44. Système de freinage pour véhicule automobile suivant la revendication 43 lorsqu'elle dépend de la revendication 36, caractérisé en ce que l'élément de transmission de force est réalisé sous la forme d'un tronçon de tige cylindrique (93) traversant le piston principal (55) et en ce que le piston intermédiaire (79, 91) comporte un moyeu axial (150) qui entoure radialement le tronçon de tige (93) et est pourvu d'une collerette de butée (151) dont l'espacement vis-à-vis du tronçon de tige (93) correspond à la distance axiale (a).

45. Système de freinage pour véhicule automobile suivant la revendication 43 ou 44, caractérisé en ce que le boîtier de valve de commande (51) est agencé de façon à pouvoir être amené en coopération avec le piston intermédiaire (79, 91) de façon à permettre une transmission des forces.

46. Système de freinage pour véhicule automobile suivant la revendication 45, caractérisé en ce que le boîtier de valve de commande (51) est disposé à une distance (c) du piston intermédiaire (79, 91), une transmission de la force d'amplification, fournie par l'amplificateur d'effort de freinage à dépression (1), au piston intermédiaire (79, 91) ayant lieu après que cette distance (c) ait été parcourue.

47. Système de freinage pour véhicule automobile suivant la revendication 44 lorsqu'elle dépend de la revendication 36, caractérisé en ce que la distance (a) entre la collerette de butée (151) et le tronçon de tige (93) est supérieure à la distance (c) entre le boîtier de valve de commande (51) et le piston intermédiaire (79, 91).

48. Système de freinage pour véhicule automobile suivant la revendication 46 lorsqu'elle dépend de la revendication 44, caractérisé en ce que la distance (a) entre la collerette de butée (151) et le tronçon de tige (93) est inférieure à la distance (c) entre le boîtier de valve de commande (51) et le piston intermédiaire (79, 91).

49. Système de freinage pour véhicule automobile suivant l'une des revendications 43 à 48, caractérisé en ce que l'organe d'entrée (4) est positionné au moyen d'une butée (152) prévue sur le piston intermédiaire (79, 91).

50. Système de freinage pour véhicule automobile suivant la revendication 49, caractérisé en ce que la butée est constituée par un circlip (152) qui est disposé dans le moyeu (150) et sur lequel le tronçon de tige (93) prend appui axialement.

51. Système de freinage pour véhicule automobile suivant l'une des revendications précédentes, dans lequel il est prévu une seconde liaison entre la chambre hydraulique et le réservoir de stockage d'agent de pression, caractérisé en ce que cette seconde liaison (116) est agencée de façon à pouvoir être bloquée sous l'effet d'un déplacement du piston intermédiaire (79, 91) suivant la direction d'actionnement.

52. Système de freinage pour véhicule automobile suivant la revendication 51, caractérisé en ce que la seconde liaison (116) est constituée par une ouverture (orifice de soulagement (117)) débouchant dans la chambre hydraulique (50) et coopèrant avec un élément d'étanchéité (118) disposé sur le piston intermédiaire (79, 91).

53. Système de freinage pour véhicule automobile suivant la revendication 52, caractérisé en ce qu'en position de repos, l'ouverture (117) est située à une distance (d) de l'élément d'étanchéité (118).

54. Système de freinage pour véhicule automobile suivant la revendication 52 ou 53, caractérisé en ce que l'ouverture (117) est réalisée sous la forme d'un orifice d'étranglement.

55. Système de freinage pour véhicule automobile suivant la revendication 8, caractérisé en ce que le dispositif de réaction comprend un élément de transmission de force qui est disposé à une distance axiale (z) de l'organe d'entrée (piston intérieur (57)) et qui, lorsqu'une pression préfixée est atteinte dans la chambre de pression principale (81), permet qu'une composante de force orientée dans le sens opposé à la force d'un ressort de compression (158) prenant appui sur l'organe fournissant la force d'amplification (piston extérieur (56)) puisse agir sur l'organe d'entrée (piston intérieur (57)).

56. Système de freinage pour véhicule automobile suivant la revendication 55, caractérisé en ce que l'organe de transmission de force (156) est guidé d'une manière étanche dans le piston extérieur (56) et en ce que le ressort de compression (158, 160) prend appui sur une surface annulaire (159) réalisée sur le piston extérieur (56).

57. Système de freinage pour véhicule automobile suivant la revendication 56, caractérisé en ce que le ressort de compression est réalisé sous la forme d'un ressort hélicoïdal cylindrique (158).

58. Système de freinage pour véhicule automobile suivant la revendication 56, caractérisé en ce que le ressort de compression est réalisé sous la forme d'une rondelle Belleville.

59. Système de freinage pour véhicule automobile suivant la revendication 56, caractérisé en ce que le ressort de compression est réalisé sous la forme d'un bloc élastique en caoutchouc (160) dont la forme profilée n'assure, dans la phase initiale de l'actionnement, qu'un appui partiel du piston intérieur (57).

60. Système de freinage pour véhicule automobile suivant la revendication 59, caractérisé en ce que l'extrémité du piston intérieur (57) est en forme de calotte sphérique et coopère avec un évidement conique (161) du bloc élastique en caoutchouc (160).

**61.** Système de freinage pour véhicule automobile suivant la revendication 59, caractérisé en ce que l'extrémité du piston intérieur (57) a la forme d'un tronc de cône dont l'angle de cône est supérieur à l'angle de cône de l'évidement conique (161) réalisé dans le bloc élastique en caoutchouc (160).

**62.** Système de freinage pour véhicule automobile suivant la revendication 59, caractérisé en ce que l'organe de transmission de force (156) est pourvu d'un prolongement axial (162) qui est dirigé vers le piston intérieur (57) et traverse le bloc élastique en caoutchouc (160) et dont la longueur correspond à la longueur du bloc élastique en caoutchouc (160) diminuée de la profondeur de l'évidement conique (161).

Fig. 1

Fig. 2

Fig. 3

Fig. 4

# Fig. 5

Fig. 6

EP 0 386 179 B1

Fig. 7

Fig. 8

Fig. 9

Fig. 10

59  119  Z  56  91  57

157  158  159

64  156

Fig. 11

$F_A$

A

$F_E$

Fig. 12

56  160  161  57

Z

64  156  119  162  159

Fig. 13

$F_A$

B

$F_E$